(19) Europäisches Patentamt
European Patent Office
Office européen des brevets

(11) **EP 2 698 521 B1**

(12) **EUROPÄISCHE PATENTSCHRIFT**

(45) Veröffentlichungstag und Bekanntmachung des Hinweises auf die Patenterteilung:
**08.01.2025 Patentblatt 2025/02**

(21) Anmeldenummer: **13003563.7**

(22) Anmeldetag: **16.07.2013**

(51) Internationale Patentklassifikation (IPC):
**F02D 41/00** (2006.01)      **F02D 35/02** (2006.01)
**F02D 19/02** (2006.01)      **F02M 21/02** (2006.01)
**F02D 41/40** (2006.01)      F02D 37/02 (2006.01)
**F02D 29/06** (2006.01)

(52) Gemeinsame Patentklassifikation (CPC):
**F02D 19/024; F02D 29/06; F02D 35/023;**
**F02D 35/025; F02D 41/0027; F02D 41/008;**
F02D 37/02; F02D 41/0085; F02D 41/401;
F02M 21/0278; Y02T 10/30

(54) **Verfahren zum Betreiben einer Brennkraftmaschine**

Method for operating a combustion engine

Procédé destiné au fonctionnement d'un moteur à combustion interne

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.08.2012 AT 8952012**

(43) Veröffentlichungstag der Anmeldung:
**19.02.2014 Patentblatt 2014/08**

(73) Patentinhaber: **Innio Jenbacher GmbH & Co OG**
**6200 Jenbach (AT)**

(72) Erfinder:
• **Barth, Christian**
**29358 Eicklingen (DE)**
• **Kopecek, Herbert**
**6130 Schwaz (AT)**
• **Spyra, Nikolaus**
**6020 Innsbruck (AT)**
• **Waldhart, Michael**
**6410 Telfs (AT)**

(74) Vertreter: **Torggler & Hofmann Patentanwälte - Innsbruck**
**Torggler & Hofmann Patentanwälte GmbH & Co KG**
**Postfach 85**
**6020 Innsbruck (AT)**

(56) Entgegenhaltungen:
EP-A1- 2 136 058          DE-A1- 102010 045 689
DE-A1- 19 955 252          US-A1- 2010 089 364
US-A1- 2012 191 325

**Beschreibung**

Die Erfindung betrifft ein Verfahren zum Betreiben einer Brennkraftmaschine, insbesondere eines Gasmotors, mit wenigstens zwei Zylindern, wobei von jedem Zylinder ein zylinderindividuelles erstes Zylindersignal erfasst wird, wobei abhängig vom ersten Zylindersignal wenigstens ein Verbrennungsparameter des entsprechenden Zylinders eingestellt wird.

Die Zylinder einer Brennkraftmaschine weisen üblicherweise verbrennungstechnische Unterschiede auf, das heißt, dass bei globaler Regelung von Verbrennungsparametern, wie beispielsweise Brennstoffmenge oder Zündzeitpunkt, die individuellen Beiträge der Zylinder zur gesamten verrichteten Arbeit der Brennkraftmaschine unterschiedlich sind. Unter globaler bzw. motorglobaler Regelung von Verbrennungsparametern ist im Rahmen der Erfindung gemeint, dass alle Zylinder einer Brennkraftmaschine mit denselben Werten für die entsprechenden Stellgrößen betrieben werden, also beispielsweise, dass bei einer globalen Regelung bezüglich Brennstoffmenge jeder Zylinder mit derselben Öffnungsdauer des Gaseinblaseventils beaufschlagt wird oder dass bei einer globalen Regelung bezüglich Zündzeitpunkt die Zündeinrichtungen der Zylinder jeweils bei derselben Kolbenstellung des jeweiligen Kolbens im Zylinder - üblicherweise ausgedrückt in Grad Kurbelwinkel vor OT (oberer Totpunkt des Kolbens im Zylinder) - aktiviert werden.

Entsprechende Brennkraftmaschinen und Verfahren zum Betreiben solcher Brennkraftmaschinen gehen aus der US 2010/089364 A1, der US 2012/191325 A1, der DE 10 045689 A1, der DE 199 55 252 A1 und der EP 2 136 058 A1 hervor.

Die Arbeit eines Zylinders wird bei einer Hubkolbenmaschine über eine mit einem Kolbenpleuel des Zylinders verbundene Kurbelwelle auf eine Arbeitswelle der Brennkraftmaschine übertragen, wobei oftmals ein elektrischer Generator mit der Arbeitswelle verbunden ist, um die mechanische Energie der Arbeitswelle in elektrische Energie zu wandeln. Unter den verschiedenen Möglichkeiten einer Zylindergleichstellung steht jene im Fokus, die Spitzendrücke in den einzelnen Zylindern anzugleichen, um eine möglichst gleichmäßige mechanische Spitzenbelastung der Bauteile zu erreichen. Alternative Gleichstellungsvarianten sehen z.B. die Optimierung des Motorwirkungsgrades oder die Minimierung der Schadstoffemissionen im Vordergrund.

In Bezug auf eine Zylindergleichstellungsregelung ist in der US 7,957,889 B2 beschrieben, dass die Brennstoffeinbringung für jeden Zylinder einer Brennkraftmaschine so angepasst wird, dass der maximale Zylinderinnendruck bzw. Zylinderspitzendruck jedes Zylinders auf einen gemeinsamen Zielwert mit Toleranzband eingestellt wird. Dieser Zielwert ergibt sich hierbei aus dem arithmetischen Mittelwert aller Zylinderspitzendrücke.

Bisher bekannte Systeme verwenden den arithmetischen Mittelwert von zylinderindividuellen Signalen wie z.B. dem Zylinderspitzendruck als Zielgröße für eine Zylindergleichstellungsregelung. Diese Systeme berücksichtigen jedoch nicht die zylinderindividuellen Unterschiede, die sich beispielsweise aus Zylinderparametern wie Luftfüllung, Ablagerungen und Verschleiß, Verbrennungsschwerpunktlage oder mechanische Toleranzen ergeben. Daraus ergeben sich insbesondere Streuungsbreiten in den Emissionen und Verbrennungseigenschaften, was zu Verlusten im Wirkungsgrad führen kann. Dabei können Zylinder mit niedrigeren Stickoxid- bzw. NOx-Emissionen mehr an Wirkungsgrad verlieren als Zylinder mit höheren NOx-Emissionen gewinnen können. Da global - also über die gesamte Brennkraftmaschine betrachtet - oftmals gewisse NOx-Grenzwerte eingehalten werden müssen, kann sich durch eine solche Spreizung in den NOx-Emissionen der einzelnen Zylinder aufgrund zylinderindividueller Unterschiede von Zylinderparametern insgesamt ein Wirkungsgradverlust der Brennkraftmaschine ergeben.

Aufgabe der Erfindung ist es daher, die vorbeschriebenen Nachteile zu vermeiden und ein gegenüber dem Stand der Technik verbessertes Verfahren zum Betreiben einer Brennkraftmaschine anzugeben. Insbesondere sollen zylinderindividuelle Unterschiede von Zylinderparametern, die zu unterschiedlichen Emissionen oder Wirkungsgraden der Zylinder führen können, berücksichtigt werden.

Diese Aufgabe wird erfindungsgemäß durch die Merkmale des Patentanspruchs 1 gelöst. Vorteilhafte Ausgestaltungen der Erfindung sind in den abhängigen Patentansprüchen angegeben.

Gemäß der Erfindung ist also vorgesehen, dass für jeden Zylinder ein zylinderindividueller Zylindersollwert für das erste Zylindersignal eingestellt wird, wobei in Abhängigkeit der Abweichung des ersten Zylindersignals vom Zylindersollwert der wenigstens eine Verbrennungsparameter des Zylinders eingestellt wird, wobei das erste Zylindersignal dem Zylindersollwert nachgeführt wird.

Durch das vorgeschlagene Verfahren werden zylinderindividuelle Unterschiede - beispielsweise in Bezug auf die Zylinderparameter Luftfüllung, Ablagerungen und Verschleiß, Verbrennungsschwerpunktlage oder mechanische Toleranzen - berücksichtigt, indem der Verbrennungsparameter eines Zylinders zylinderindividuell eingestellt wird, sodass das zylinderindividuelle erste Zylindersignal einem jeweils zylinderindividuellen Zylindersollwert nachgeführt wird. Es werden also hierbei gezielt die ersten Zylindersignale der Zylinder nicht auf einen gemeinsamen Sollwert nachgeführt, sondern es wird für jeden Zylinder ein passender Zylindersollwert eingestellt, durch den die zylinderindividuellen Unterschiede von Zylinderparametern berücksichtigt werden können. Dadurch kann beispielsweise erreicht werden, dass die Zylinder der Brennkraftmaschine ähnliche Emissionen und/oder ähnliche Wirkungsgrade aufweisen und zwar trotz zylinderindividueller Unterschiede von Zylinderparametern.

Vorzugsweise kann vorgesehen sein, dass von jedem Zylinder wenigstens eines der folgenden zylinderindividuellen ersten Zylindersignale erfasst wird: Zylinderinnendruck, Zylinderabgastemperatur, Stickoxidemissionen, Verbrennungsluftverhältnis. Eine besondere Ausführungsvariante sieht vor, dass als zylinderindividuelles erstes Zylindersignal ein maximaler Zylinderinnendruck eines Verbrennungszyklus erfasst wird.

Um eine bessere Signalqualität und damit eine höhere Regelgüte zu erhalten, kann vorzugsweise vorgesehen sein, dass als zylinderindividuelles erstes Zylindersignal eines Zylinders das erfasste zylinderindividuelle erste Zylindersignal über 10 bis 1000 Verbrennungszyklen, vorzugsweise 40 bis 100 Verbrennungszyklen, zeitlich gefiltert wird.

Generell kann vorgesehen sein, dass der Verbrennungsparameter eines Zylinders eingestellt wird, falls die Abweichung des ersten Zylindersignals vom Zylindersollwert einen vorgebbaren Toleranzwert überschreitet. Dadurch kann eine ruhigere Regeldynamik erzielt werden.

Es ist vorgesehen, dass der zylinderindividuelle Zylindersollwert eine statistische Größe der ersten Zylindersignale aller Zylinder, vorzugsweise den arithmetischen Mittelwert, besonders bevorzugt den Median, und einen zylinderindividuellen Offset umfasst.

Die statistische Größe kann dabei das Ergebnis einer statistischen Auswertung der ersten Zylindersignale aller Zylinder sein. Gemäß einer besonders bevorzugten Ausführungsform umfasst der zylinderindividuelle Zylindersollwert den Median der ersten Zylindersignale aller Zylinder und einen zylinderindividuellen Offset.

Gemäß der Erfindung ist vorgesehen, dass der zylinderindividuelle Offset durch ein Differenzwertkennfeld ermittelt wird, wobei im Differenzwertkennfeld zumindest ein Leistungsäquivalent der abgegebenen Leistung der Brennkraftmaschine und/oder ein Ladeluftdruck der Brennkraftmaschine, vorzugsweise zusätzlich eine Ladelufttemperatur und/oder eine Motordrehzahl der Brennkraftmaschine, berücksichtigt ist.

Das Erstellen des Differenzwertkennfelds hinsichtlich eines gewünschten Optimierungsziels kann dabei an einem Prüfstand oder bei Inbetriebnahme der Brennkraftmaschine erfolgen. Beispiele von Optimierungszielen sind möglichst ähnliche NOx-Emissionen der Zylinder oder möglichst maximale Zylinderwirkungsgrade unter Berücksichtigung der mechanischen Belastungsgrenzen oder Betriebsgrenzen der Brennkraftmaschine bzw. des Motors. Die Ermittlung der zylinderindividuellen Offsets kann auch durch entsprechende Berechnungsmethoden erfolgen, beispielsweise indem das Kennfeld in Form von Polynomen rechnerisch ausgewertet wird oder indem zwischen bekannten Messwerten von Betriebspunkten der Brennkraftmaschine entsprechend interpoliert wird.

Gemäß der Erfindung ist vorgesehen, dass der zylinderindividuelle Offset in Abhängigkeit wenigstens eines der folgenden zylinderindividuellen Zylinderparameter ermittelt wird: Zylinderdruck während der Verdichtungsphase vor Zündung, Luftmasseäquivalent, Verbrennungsschwerpunktlage, Verdichtungsverhältnis, Zündverzug.

Generell können die zylinderindividuellen Offsets abhängig von wenigstens einem zylinderindividuellen Zylinderparameter und abhängig von einem Optimierungsziel auf einem Prüfstand ermittelt und in einem Kennfeld abgelegt werden.

Die Ermittlung der angeführten Zylinderparameter ist dabei an sich bekannt. So können der Zylinderdruck während der Verdichtungsphase vor Zündung, das Luftmasseäquivalent und die Verbrennungsschwerpunktlage beispielsweise mittels Zylinderdrucksensor aus dem Zylinderinnendruckverlauf über einen Verbrennungszyklus des entsprechenden Zylinders ermittelt werden. Das Verdichtungsverhältnis und der Zündverzug können unter bestimmten Bedingungen aus dem Zylinderdruckverlauf ermittelt werden.

Für die Bestimmung eines geeigneten zylinderindividuellen Offsets kann nun jeweils die Abweichung wenigstens eines zylinderindividuellen Zylinderparameters vom Mittelwert (z.B. arithmetischer Mittelwert oder Median) dieses Zylinderparameters aller Zylinder herangezogen werden.

Dabei kann der zylinderindividuelle Offset als Summe von Summanden ausgedrückt werden, wobei die Summanden den entsprechenden - mit positiven oder negativen Koeffizienten versehenen - Abweichungen der zylinderindividuellen Zylinderparameter entsprechen.

Die Abweichung des Zylinderdrucks eines Zylinders während der Verdichtungsphase vor Zündung kann in Bezug auf den arithmetischen Mittelwert oder Median der entsprechenden Zylinderdrücke aller Zylinder ausgedrückt werden, beispielsweise in Prozent. Dabei kann ein gegenüber dem Mittelwert erhöhter Zylinderdruck während der Verdichtungsphase vor Zündung in einem positiven Summanden für den zylinderindividuellen Offset resultieren.

Die Abweichung des Luftmasseäquivalents eines Zylinders kann in Bezug auf den arithmetischen Mittelwert oder Median der Luftmasseäquivalente aller Zylinder ausgedrückt werden, beispielsweise in Prozent. Dabei kann ein gegenüber dem Mittelwert erhöhtes Luftmasseäquivalent in einem positiven Summanden für den zylinderindividuellen Offset resultieren.

Die Abweichung der Verbrennungsschwerpunktlage eines Zylinders kann als Differenz der zylinderindividuellen Verbrennungsschwerpunktlage vom arithmetischen Mittelwert oder Median der Verbrennungsschwerpunktlagen aller Zylinder ausgedrückt werden, beispielsweise in Grad Kurbelwinkel. Dabei kann eine negative Abweichung der Verbrennungsschwerpunktlage eines Zylinders (also eine frühere Verbrennungsschwerpunktlage im Vergleich zum Mittelwert der Verbrennungsschwerpunktlagen aller Zylinder) in einem positiven Summanden für den zylinderindividuellen Offset resultieren.

Die Abweichung des Verdichtungsverhältnisses eines Zylinders kann in Bezug auf den arithmetischen Mittelwert oder Median der Verdichtungsverhältnisse aller Zylinder ausgedrückt werden, beispielsweise in Prozent. Dabei kann ein gegenüber dem Mittelwert erhöhtes Verdichtungsverhältnis in einem positiven Summanden für den zylinderindividuellen Offset resultieren.

Die Abweichung des Zündverzugs eines Zylinders kann als Differenz des zylinderindividuellen Zündverzugs vom arithmetischen Mittelwert oder Median der Zündverzüge aller Zylinder ausgedrückt werden, beispielsweise in Grad Kurbelwinkel. Dabei kann eine positive Abweichung des Zündverzugs eines Zylinders (also ein längerer Zündverzug im Vergleich zum Mittelwert der Zündverzüge aller Zylinder) in einem negativen Summanden für den zylinderindividuellen Offset resultieren.

Anders ausgedrückt kann der zylinderindividuelle Offset Δm aus den jeweiligen Abweichungen der Zylinderparameter gemäß folgender Formel ermittelt werden:

$$\Delta m = a \cdot \Delta pverd + b \cdot \Delta air + c \cdot \Delta MFB + d \cdot \Delta \varepsilon + e \cdot \Delta delay$$

Dabei bezeichnet Δpverd die Abweichung des Zylinderdrucks während der Verdichtungsphase vor Zündung, Δair die Abweichung des Luftmasseäquivalents, ΔMFB die Abweichung in der Verbrennungsschwerpunktlage, Δε die Abweichung im Verdichtungsverhältnis (z.B. infolge Bauteiltoleranzen) und Δdelay die Abweichungen im Zündverzug (z.B. infolge von Verschleiß einer Zündkerze und/oder Vorkammer). Mittels der den Abweichungen der Zylinderparameter zugeordneten Koeffizienten a, b, c, d, e kann eine Gewichtung der Summanden für die Ermittlung des jeweiligen zylinderindividuellen Offsets Δm erfolgen. Durch Nullsetzen eines oder mehrerer dieser Koeffizienten kann bzw. können die entsprechenden Abweichungen für die Ermittlung des zylinderindividuellen Offsets Δm ignoriert werden. Durch die Wahl eines positiven oder negativen Koeffizienten kann darüber hinaus bestimmt werden, ob eine positive Abweichung zu einem positiven Summanden oder zu einem negativen Summanden für den zylinderindividuellen Offset Δm führt.

Eine Feinabstimmung der Koeffizienten a, b, c, d, e kann beispielsweise an einem Prüfstand oder bei Inbetriebnahme der Brennkraftmaschine erfolgen. Dabei kann vorgesehen sein, dass die Koeffizienten jeweils auf einen bestimmten Wert fix eingestellt werden. Die Koeffizienten können auch durch analytische Ansätze, durch Simulationen oder basierend auf Messergebnissen ermittelt werden. Es ist auch möglich, die Zylinderparameter und die entsprechenden Abweichungen online während des Betriebs der Brennkraftmaschine zu erfassen und die Koeffizienten abhängig vom Optimierungsziel ebenfalls während des Betriebs zu ändern. So kann beispielsweise vorgesehen sein, dass auf abnormale Verbrennungszustände reagiert wird, indem ein Zylinder einen höheren Offset Δm erhält, falls Fehlzündungen auftreten bzw. indem ein Zylinder einen niedrigeren Offset Δm erhält, falls Klopfen und/oder Glühzündungen auftreten.

Gemäß einer besonders bevorzugten Ausführungsform kann vorgesehen sein, dass als Verbrennungsparameter eine Brennstoffmenge für den entsprechenden Zylinder eingestellt wird. Bei einer vorkammergezündeten Brennkraftmaschine kann es sich dabei um die Brennstoffmenge für den jeweiligen Hauptbrennraum eines Zylinders handeln. Die Brennstoffmenge für einen Zylinder kann erhöht werden, falls das zylinderindividuelle erste Zylindersignal kleiner dem zylinderindividuellen Zylindersollwert ist und die Brennstoffmenge für einen Zylinder kann verringert werden, falls das zylinderindividuelle erste Zylindersignal größer dem zylinderindividuellen Zylindersollwert ist. Vorzugsweise kann dabei für jeden Zylinder ein Brennstoffdosierventil vorgesehen sein, wobei zum Einstellen der Brennstoffmenge für einen Zylinder die Öffnungsdauer des entsprechenden Brennstoffdosierventils eingestellt wird. Bei einem solchen Brennstoffdosierventil kann es sich vorzugsweise um ein Port-Injection-Ventil handeln, das im Bereich des Einlasstraktes eines Zylinders angeordnet ist. Es können dabei auch Port-Injection-Ventile eingesetzt werden, die beispielsweise nur eine vollständig geöffnete oder eine vollständig geschlossene Position ermöglichen. Hierbei kann die Öffnungsdauer als der Zeitraum definiert sein, in dem sich das Ventil in seiner vollständig geöffneten Position befindet. Generell können aber auch hubgesteuerte Ventile zum Einsatz kommen, bei denen zum Einstellen der Brennstoffmenge für einen Zylinder die Öffnungsdauer und/oder der Öffnungshub eines Ventils eingestellt werden.

Eine Regelung bezüglich des Verbrennungsparameters Brennstoffmenge, sodass das jeweilige zylinderindividuelle erste Zylindersignal auf den jeweiligen zylinderindividuellen Zylindersollwert nachgeführt wird, kann dabei - in Abhängigkeit des verwendeten zylinderindividuellen ersten Zylindersignals - gemäß nachfolgender Tabelle 1 erfolgen. Dabei listet Spalte 1 der Tabelle 1 das jeweilige zylinderindividuelle erste Zylindersignal und eine geeignete Möglichkeit zur Erfassung des jeweiligen ersten Zylindersignals auf. Gemäß Spalte 2 der Tabelle 1 erfolgt eine Erhöhung der Brennstoffmenge für einen Zylinder, falls das jeweilige erste Zylindersignal kleiner dem entsprechenden zylinderindividuellen Zylindersollwert ist. Gemäß Spalte 3 der Tabelle 1 erfolgt eine Verringerung der Brennstoffmenge für einen Zylinder, falls das jeweilige erste Zylindersignal größer dem entsprechenden zylinderindividuellen Zylindersollwert ist. Die Brennstoffmenge kann dabei für einen Zylinder erhöht werden, indem beispielsweise die Öffnungsdauer eines dem Zylinder zugeordneten Brennstoffdosierventils erhöht wird. Entsprechend kann die Brennstoffmenge für einen Zylinder verringert werden, indem die Öffnungsdauer des dem Zylinder zugeordneten Brennstoffdosierventils verringert wird.

Tabelle 1: Regeleingriffe bezüglich der Brennstoffmenge

| Zylinderindividuelles erstes Zylindersignal | Erhöhen der Brennstoffmenge für einen Zylinder, falls | Verringern der Brennstoffmenge für einen Zylinder, falls |
|---|---|---|
| Zylinderspitzendruck, erfasst durch Zylinderdrucksensor im Brennraum | niedriger Zylinderspitzendruck | hoher Zylinderspitzendruck |
| Zylinderabgastemperatur, erfasst durch Thermoelement nach Auslassventil | niedrige Zylinderabgastemperatur | hohe Zylinderabgastemperatur |
| Stickoxidemissionen, erfasst durch NOx-Sonde | niedrige Stickoxidemissionen | hohe Stickoxidemissionen |
| Kehrwert des Verbrennungsluftverhältnisses, erfasst durch Breitband-Lambdasonde oder Sauerstoffsensor | niedriger Kehrwert des Verbrennungsluftverhältnisses | hoher Kehrwert des Verbrennungsluftverhältnisses |

In einer weiteren bevorzugten Ausführungsform kann vorgesehen sein, dass als Verbrennungsparameter ein Zündzeitpunkt für den entsprechenden Zylinder eingestellt wird. Vorzugsweise kann dabei für jeden Zylinder eine Zündeinrichtung vorgesehen sein, wobei der Zündzeitpunkt der Zündeinrichtung in Grad Kurbelwinkel vor OT (oberer Totpunkt des Kolbens im Zylinder) eingestellt wird.

Der Zündzeitpunkt wird üblicherweise ausgedrückt in Grad Kurbelwinkel vor OT (oberer Totpunkt des Kolbens im Zylinder) und gibt somit an, wann eine entsprechende Zündeinrichtung zur Entflammung eines Brennstoffs oder Brennstoff-Luft-Gemischs im Zylinder bzw. Brennraum ausgelöst wird. Bei der Zündeinrichtung kann es sich dabei um eine Zündkerze (z.B. Elektrodenzündkerze oder Laserzündkerze) oder um einen Pilot-Injektor zur Durchführung einer Piloteinspritzung von z.B. Dieselkraftstoff handeln. Als Zündeinrichtung kann auch eine Vorkammer zum Einsatz kommen. Üblicherweise wird der Zündzeitpunkt für jeden Zylinder einer Brennkraftmaschine mit demselben, global vorgegebenen Wert (globaler Vorgabewert) - ausgedrückt in Grad Kurbelwinkel vor OT - festgelegt. Beispielsweise beträgt dieser Wert 20 bis 30 Grad Kurbelwinkel vor OT, wobei der Wert abhängig von der Drehzahl der Brennkraftmaschine und/oder abhängig von der eingesetzten Zündeinrichtung festgelegt werden kann. Dieser globale Vorgabewert kann aus einem Zündzeitpunktkennfeld abgeleitet werden, in dem geeignete Werte für den Zündzeitpunkt in Abhängigkeit von der Leistung und/oder des Ladeluftdrucks und/oder der Ladelufttemperatur und/oder der Motordrehzahl der Brennkraftmaschine abgelegt sind.

In einer bevorzugten Ausführungsform der Erfindung kann vorgesehen sein, dass der Zündzeitpunkt für einen Zylinder früher (gegenüber dem globalen Vorgabewert) eingestellt wird, falls das jeweilige zylinderindividuelle erste Zylindersignal kleiner dem entsprechenden zylinderindividuellen Zylindersollwert ist und dass der Zündzeitpunkt für einen Zylinder später (gegenüber dem globalen Vorgabewert) eingestellt wird, falls das jeweilige zylinderindividuelle erste Zylindersignal größer dem entsprechenden zylinderindividuellen Zylindersollwert ist.

Eine Regelung bezüglich des Verbrennungsparameters Zündzeitpunkt, sodass das jeweilige zylinderindividuelle erste Zylindersignal auf den jeweiligen zylinderindividuellen Zylindersollwert nachgeführt wird, kann dabei - in Abhängigkeit des verwendeten zylinderindividuellen ersten Zylindersignals - gemäß nachfolgender Tabelle 2 erfolgen. Dabei listet Spalte 1 der Tabelle 2 das jeweilige zylinderindividuelle erste Zylindersignal und eine geeignete Möglichkeit zur Erfassung des jeweiligen ersten Zylindersignals auf. Gemäß Spalte 2 der Tabelle 2 wird für einen Zylinder ein früherer Zündzeitpunkt eingestellt, falls das jeweilige erste Zylindersignal des Zylinders kleiner dem entsprechenden zylinderindividuellen Zylindersollwert ist. Gemäß Spalte 3 der Tabelle 2 wird für einen Zylinder ein späterer Zündzeitpunkt eingestellt, falls das jeweilige erste Zylindersignal des Zylinders größer dem zylinderindividuellen Zylindersollwert ist.

Tabelle 2: Regeleingriffe bezüglich des Zündzeitpunkts

| Zylinderindividuelles erstes Zylindersignal | Zündzeitpunkt für einen Zylinder früher einstellen, falls | Zündzeitpunkt für einen Zylinder später einstellen, falls |
|---|---|---|
| Zylinderspitzendruck, erfasst durch Zylinderdrucksensor im Brennraum | niedriger Zylinderspitzendruck | hoher Zylinderspitzendruck |
| Stickoxidemissionen, erfasst durch NOx-Sonde | niedrige Stickoxidemissionen | hohe Stickoxidemissionen |

Gemäß einer bevorzugten Ausführungsform kann vorgesehen sein, dass zum Einstellen des wenigstens einen Verbrennungsparameters ein Parameterwert ermittelt wird, wobei vorzugsweise der Parameterwert einen vorgebbaren motorglobalen Zielwert und einen zylinderindividuellen Differenzwert umfasst.

Der zylinderindividuelle Differenzwert kann in Bezug auf ein Einstellen des Verbrennungsparameters Zündzeitpunkt beispielsweise in einem Bereich von +/- 4 Grad Kurbelwinkel vor OT, vorzugsweise in einem Bereich von +/- 2 Grad Kurbelwinkel vor OT, liegen.

Beim vorgebbaren Zielwert kann es sich um einen globalen Wert handeln, der für alle Zylinder der Brennkraftmaschine gilt.

Beim vorgebbaren Zielwert in Bezug auf das Einstellen des Zündzeitpunkts als Verbrennungsparameter kann es sich um den globalen Vorgabewert für den Zündzeitpunkt in den Zylindern eines stationären Gasmotors handeln. Der vorgebbare Zielwert kann dabei aus einem Zündzeitpunktkennfeld abgeleitet werden. Im Zündzeitpunktkennfeld können geeignete Werte für den Zündzeitpunkt in Abhängigkeit von der Leistung und/oder des Ladeluftdrucks und/oder der Ladelufttemperatur und/oder der Motordrehzahl der Brennkraftmaschine abgelegt sein. Die im Zündzeitpunktkennfeld abgelegten Werte können dabei auf einem Prüfstand ermittelt werden.

Beim vorgebbaren Zielwert in Bezug auf das Einstellen der Brennstoffmenge als Verbrennungsparameter kann es sich um einen motorglobalen Grundwert für die Öffnungsdauern von Brennstoffdosierventilen bzw. Gaseinblaseventilen für die Zylinder eines stationären Gasmotors handeln.

Grundsätzlich kann bei in Brennkraftmaschinen eingesetzten Brennverfahren zwischen luftgeführten und brennstoffgeführten Brennverfahren unterschieden werden. Bei einem luftgeführten Brennverfahren wird abhängig vom Betriebspunkt der Brennkraftmaschine und einem vorgebbaren Zielwert für das Brennstoff-Luft-Verhältnis beispielsweise eine zu dosierende Brennstoffmenge ermittelt, um eine bestimmte Emissionsmenge oder einen bestimmten Ladeluftdruck zu erhalten. Die dabei eingesetzten Motorregelungen umfassen üblicherweise einen Emissionsregler. Bei einem brennstoffgeführten bzw. gasgeführten Brennverfahren wird abhängig vom Betriebspunkt der Brennkraftmaschine und einem vorgebbaren Zielwert für die Leistung und/oder die Drehzahl der Brennkraftmaschine eine zu dosierende Brennstoffmenge ermittelt. Brennstoffgeführte Brennverfahren haben ihre Anwendung insbesondere bei drehzahlvariablem Betrieb einer Brennkraftmaschine, bei einer Brennkraftmaschine im Inselbetrieb, bei Motorstart oder im Leerlauf der Brennkraftmaschine. Die dabei eingesetzten Motorregelungen umfassen üblicherweise einen Leistungsregler und/oder einen Drehzahlregler.

Für luftgeführte Brennverfahren, bei denen beispielsweise ein Emissionsregler zum Einsatz kommt, kann vorzugsweise vorgesehen sein, dass der vorgebbare Zielwert aus einem vorgebbaren Brennstoff-Luft-Verhältnis ermittelt wird, wobei vorzugsweise das vorgebbare Brennstoff-Luft-Verhältnis aus einem Leistungsäquivalent der abgegebenen Leistung der Brennkraftmaschine, vorzugsweise einer elektrischen Leistung eines mit der Brennkraftmaschine verbundenen Generators, und/oder aus einem Ladeluftdruck und/oder aus einer Motordrehzahl der Brennkraftmaschine ermittelt wird.

Unter einem Leistungsäquivalent wird im Rahmen dieser Erfindung die tatsächliche mechanische Leistung der Brennkraftmaschine oder eine der mechanischen Leistung entsprechende Ersatzgröße verstanden. Dabei kann es sich beispielsweise um eine elektrische Leistung eines mit der Brennkraftmaschine verbundenen Generators handeln, die aus der Leistungsabgabe des Generators gemessen wird. Es kann sich dabei auch um eine berechnete mechanische Leistung der Brennkraftmaschine handeln, die aus Motordrehzahl und Drehmoment oder aus der elektrischen Leistung des Generators und dem Wirkungsgrad des Generators berechnet wird. Es kann sich dabei auch nur um die Motordrehzahl handeln, falls die Leistungsaufnahme des Verbrauchers über die Drehzahl genau bekannt ist. Weiters kann es sich beim Leistungsäquivalent auch um den indizierten Mitteldruck, der in bekannter Weise aus dem Zylinderinnendruckverlauf ermittelt werden kann, oder um den effektiven Mitteldruck, der sich in bekannter Weise aus dem abgegebenen Drehmoment oder aus der elektrischen oder mechanischen Leistung errechnen lässt, handeln. Dabei kann aus dem bekannten Zusammenhang zwischen effektivem Mitteldruck, dem Hubraum eines Zylinders und der bei einem Arbeitstakt geleisteten Arbeit in weiterer Folge ein Leistungsäquivalent der Brennkraftmaschine ermittelt werden.

Das vorgebbare Brennstoff-Luft-Verhältnis kann in an sich bekannter Weise aus dem Ladeluftdruck und der Leistung der Brennkraftmaschine ermittelt werden. So kann das vorgebbare Brennstoff-Luft-Verhältnis für eine als Gasmotor ausgebildete Brennkraftmaschine beispielsweise gemäß EP 0 259 382 B1 ermittelt werden.

Der vorgebbare Zielwert für die Gaseinblasedauer kann dabei aus dem Durchflussverhalten der Gaseinblaseventile und den an den Gaseinblaseventilen vorherrschenden Randbedingungen (wie z.B. Druck und Temperatur des Brenngases, Saugrohrdruck bzw. Ladeluftdruck) ermittelt werden. Aus den Bedingungen im Saugrohr des Gasmotors, insbesondere aus Ladeluftdruck und Ladelufttemperatur, kann das Luftmasseäquivalent (ein der Luftmasse entsprechender Wert) des Gasmotors ermittelt werden. Mit dem vorgebbaren Brennstoff-Luft-Verhältnis kann daraus der Sollwert für die Brenngasmasse bestimmt werden. Mit dem Durchflussverhalten der Gaseinblaseventile und den Randbedingungen an den Gaseinblaseventilen kann dann die benötigte globale Öffnungsdauer bzw. Gaseinblasedauer für die Gaseinblaseventile ermittelt werden, um die zuvor ermittelte Brenngasmasse in den Gasmotor einzubringen. Diese globale Gaseinblasedauer entspricht in diesem Beispiel dem vorgebbaren Zielwert.

Für gasgeführte Brennverfahren, bei denen beispielsweise ein Leistungsregler und/oder ein Drehzahlregler zum Einsatz kommt, kann vorzugsweise vorgesehen sein, dass der vorgebbare Zielwert in Abhängigkeit von der Abweichung eines Leistungsäquivalents der abgegebenen Leistung der Brennkraftmaschine von einem vorgebbaren Zielleistungsäquivalent und/oder in Abhängigkeit von der Abweichung einer Motordrehzahl der Brennkraftmaschine von einer vorgebbaren Zieldrehzahl der Brennkraftmaschine ermittelt wird.

Dabei kann ein Leistungsregler vorgesehen sein, der in Abhängigkeit der Abweichung eines aktuellen Leistungsäquivalents der abgegebenen Leistung (Istleistung) der Brennkraftmaschine (z.B. eine gemessene elektrische Leistung eines mit der Brennkraftmaschine verbundenen Generators) vom vorgebbaren Zielleistungsäquivalent (Sollleistung) der Brennkraftmaschine einen motorglobalen Vorgabewert für den Brennstoffmassenstrom ermittelt. Alternativ oder zusätzlich kann ein Drehzahlregler vorgesehen sein, der in Abhängigkeit der Abweichung einer aktuellen Motordrehzahl (Istdrehzahl) der Brennkraftmaschine von der vorgebbaren Zieldrehzahl (Solldrehzahl) der Brennkraftmaschine einen motorglobalen Vorgabewert für den Brennstoffmassenstrom ermittelt. Aus dem ermittelten Zielwert für den Brennstoffmassenstrom kann in weiterer Folge der vorgebbare Zielwert - z.B. für die motorglobale Öffnungsdauer von Brennstoffdosierventilen oder für den motorglobalen Vorgabewert für den Zündzeitpunkt von Zündeinrichtungen - ermittelt werden.

Eine besondere Ausführungsvariante sieht vor, dass der zylinderindividuelle Differenzwert einen zylinderindividuellen Vorsteuerwert enthält, wobei vorzugsweise der zylinderindividuelle Vorsteuerwert aus einem Ladeluftdruck und vorzugsweise zusätzlich aus einer Ladelufttemperatur der Brennkraftmaschine ermittelt wird. Die zylinderindividuellen Vorsteuerwerte können dabei aus Messungen während der Inbetriebnahme der Brennkraftmaschine stammen und beispielsweise auch als Rückfallwerte verwendet werden für den Fall, dass ein Sensor zur Erfassung des zylinderindividuellen Signals ausfällt oder gestört ist.

Die zylinderindividuellen Vorsteuerwerte können beispielsweise die Gasdynamik im Saugrohr und/oder im Gasrail eines Gasmotors sowie entsprechende Bauteiltoleranzen berücksichtigen, wobei die Gasdynamik durch Simulationen oder Messungen ermittelt werden kann. Die Gasdynamik sowie Auswirkungen von Bauteiltoleranzen sind unter anderem durch den Ladeluftdruck, die Motordrehzahl und die Ladelufttemperatur beeinflusst. Daher ist es günstig, geeignete zylinderindividuelle Vorsteuerwerte aus einem Kennfeld abzuleiten, das entsprechende Werte für unterschiedliche Ladeluftdrücke und Ladelufttemperaturen beinhaltet. So können bei Inbetriebnahme des Gasmotors entsprechende Messdaten erfasst werden oder entsprechende Kennfelder durch Versuche oder Simulationen ermittelt werden. Es ist auch möglich, dass durch Online-Messungen während des Betriebs des Gasmotors ein adaptives Kennfeld generiert wird.

Als besonders vorteilhaft hat es sich herausgestellt, wenn der zylinderindividuelle Differenzwert mit einem Ausgleichswert beaufschlagt wird, wobei der Ausgleichswert dem arithmetischen Mittelwert der zylinderindividuellen Differenzwerte entspricht. Dies ist insbesondere dann vorteilhaft, um die vorgeschlagene Lösung in Brennkraftmaschinen einzubauen oder nachzurüsten, die bisher ohne Zylindergleichstellung bzw. nur mit einem globalen Regler betrieben wurden. Durch eine derartige Korrektur der zylinderindividuellen Differenzwerte kann insbesondere erreicht werden, dass eine global dosierte Brennstoffmenge nicht durch die vorgeschlagene Lösung beeinflusst wird und eine gegebenenfalls vorhandene globale Emissionsregelung der Brennkraftmaschine nicht angepasst werden muss. Da auch die Werte für die jeweiligen Zündzeitpunkte in eine globale Motorregelung einfließen können, kann durch eine Korrektur der zylinderindividuellen Differenzwerte auch in Bezug auf das Einstellen des Zündzeitpunkts eine unerwünschte Auswirkung auf die globale Motorregelung vermieden werden.

In einer bevorzugten Ausführungsform der Erfindung kann vorgesehen sein, dass für jeden Zylinder ein Verbrennungszustand überwacht und in Bezug auf einen vorgebbaren Sollzustand als normal oder abnormal bewertet wird, wobei der Verbrennungsparameter eines Zylinders nur eingestellt wird, falls der Verbrennungszustand des Zylinders als normal bewertet wird. Dabei kann als Verbrennungszustand Klopfen und/oder Glühzünden und/oder Aussetzen in der Verbrennung überwacht werden, wobei der Verbrennungszustand eines Zylinders als normal bewertet wird, falls kein Klopfen und/oder kein Glühzünden und/oder kein Aussetzen in der Verbrennung erkannt werden. Es kann auch vorgesehen sein, dass für Zylinder, die abnormale Verbrennungszustände oder Überschreitungen von thermomechanischen Limits durch die Verbrennung aufweisen, die zylinderindividuellen Zylindersollwerte so eingestellt werden, dass den abnormalen Verbrennungszuständen entgegengewirkt wird oder der betroffene Zylinder in einen Betriebspunkt geführt wird, der sich weiter entfernt von den thermomechanischen Limits befindet. So kann beispielsweise vorgesehen sein, dass bei einem Zylinder mit abnormaler Verbrennung (z.B. Klopfen, Glühzünden, Überschreiten eines Spitzendrucklimits) die Einblasedauer bzw. Öffnungsdauer des dem Zylinder zugeordneten Brennstoffdosierventils nicht verlängert oder bei Bedarf gekürzt wird. Ebenso kann beispielsweise vorgesehen sein, dass bei einem Zylinder mit aussetzender Verbrennung die Einblasedauer nicht verkürzt oder sogar verlängert wird.

Generell kann auch vorgesehen sein, dass parallel zu einer Regelung bzgl. eines zylinderindividuellen ersten Zylindersignals durch Einstellen eines ersten Verbrennungsparameters zusätzlich eine Regelung bzgl. eines weiteren zylinderindividuellen Zylindersignals durch Einstellen eines weiteren Verbrennungsparameters erfolgt. So kann beispielsweise vorgesehen sein, dass das vorgeschlagene Verfahren in Bezug auf den maximaler Zylinderinnendruck als zylinderindividuelles erstes Zylindersignal und in Bezug auf die Brennstoffmenge als Verbrennungsparameter durchgeführt wird, wobei gleichzeitig eine zylinderindividuelle Regelung des Verbrennungsparameters Zündzeitpunkt abhängig von der zylinderindividuellen Verbrennungsschwerpunktlage erfolgt. Dabei kann vorgesehen sein, dass der jeweilige Zündzeitpunkt abhängig von der Abweichung der zylinderindividuellen Verbrennungsschwerpunktlage von einem vorgebbaren Schwerpunktlagenwert eingestellt wird. Beim vorgebbaren Schwerpunktlagenwert kann es sich dabei um einen globalen - also für alle Zylinder der Brennkraftmaschine gültigen - Schwerpunktlagenwert handeln.

Weitere Einzelheiten und Vorteile der vorliegenden Erfindung werden anhand der nachfolgenden Figurenbeschreibung erläutert. Dabei zeigt:

Fig. 1     eine beispielhafte Darstellung der Abhängigkeit der Zylinderwirkungsgrade von den NOx-Emissionen der Zylinder einer Brennkraftmaschine,

Fig. 2     eine beispielhafte Darstellung der Nachführung von zylinderindividuellen ersten Zylindersignalen auf zylinderindividuelle Zylindersollwerte,

Fig. 3     eine Brennkraftmaschine mit mehreren Zylindern und einer Regelungsvorrichtung zum Betreiben der Brennkraftmaschine gemäß einer Ausführungsvariante des vorgeschlagenen Verfahrens,

Fig. 4     eine schematische Darstellung von 3 Zylindern einer Brennkraftmaschine und eine Regelungsvorrichtung zum Betreiben der Brennkraftmaschine gemäß einer Ausführungsvariante des vorgeschlagenen Verfahrens,

Fig. 5     eine schematische Darstellung gemäß Fig. 4 mit einer Brennkraftmaschine mit einem brennstoffgeführten Brennverfahren,

Fig. 6     eine schematische Detaildarstellung einer vorgeschlagenen Regelungsvorrichtung,

Fig. 7     eine schematische Darstellung gemäß Fig. 4 einer weiteren Ausführungsvariante des vorgeschlagenen Verfahrens und

Fig. 8     eine schematische Detaildarstellung einer Regelungsvorrichtung einer weiteren Ausführungsvariante des vorgeschlagenen Verfahrens.

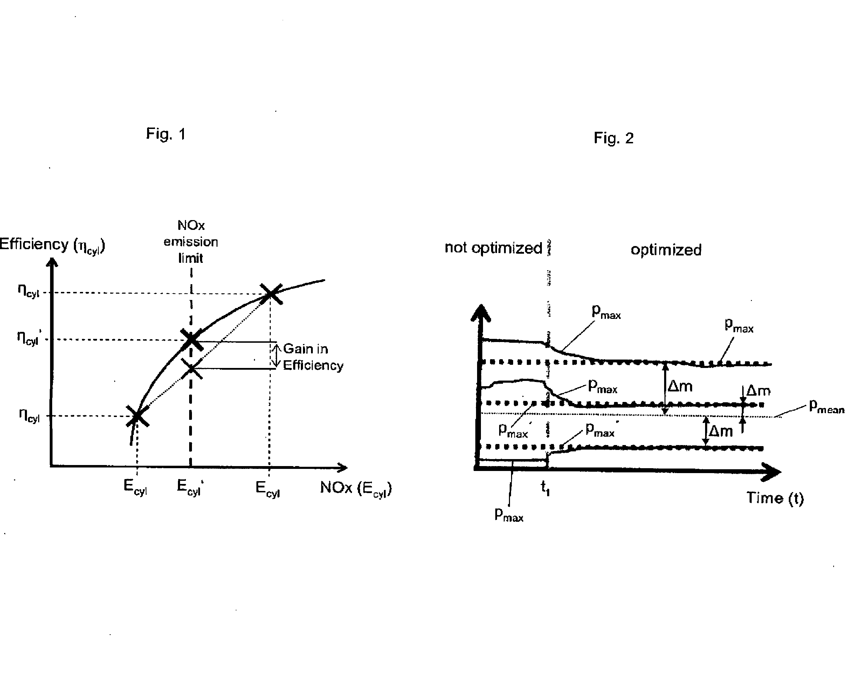

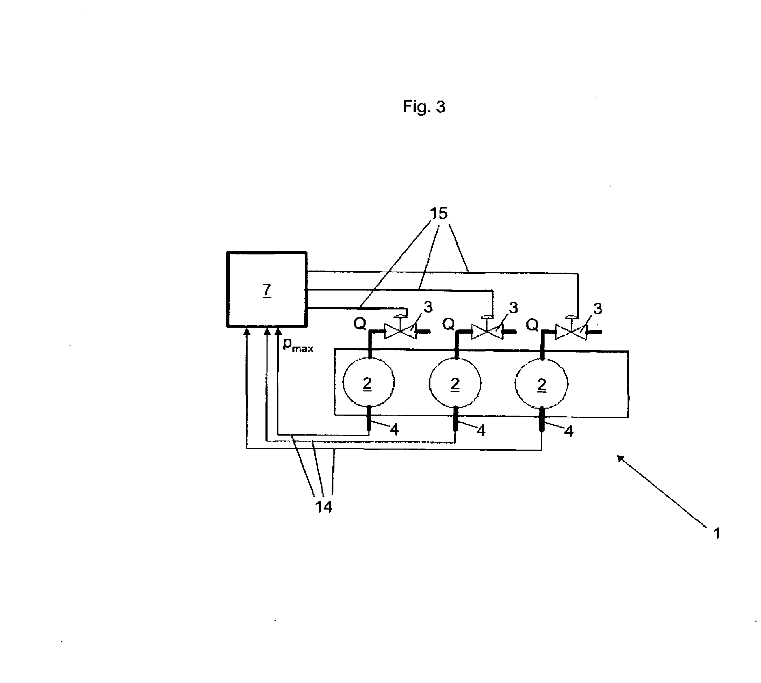

Fig. 1 zeigt beispielhaft die Zylinderwirkungsgrade $\eta_{cyl}$ von zwei Zylindern 2 einer Brennkraftmaschine 1 (siehe Fig. 3) in Abhängigkeit ihrer jeweiligen NOx-Emission $E_{cyl}$ sowie erwünschte und mit dem vorgeschlagenen Verfahren zu erzielenden Zielwerte für die NOx-Emissionen $E_{cyl}$' und für die Zylinderwirkungsgrade $\eta_{cyl}$' aller Zylinder 2.

Der Verlauf eines zu erzielenden Zylinderwirkungsgrads $\eta_{cyl}$ weist dabei eine nichtlineare Abhängigkeit von der jeweiligen NOx-Emission $E_{cyl}$ des entsprechenden Zylinders 2 auf. Die gezeigten unterschiedlichen NOx-Emissionen $E_{cyl}$ und die damit verbundenen jeweils unterschiedlichen Zylinderwirkungsgrade $\eta_{cyl}$ der Zylinder können insbesondere durch zylinderindividuelle Unterschiede von Zylinderparametern - wie beispielsweise unterschiedlich Luftfüllungen, Ablagerungen und Verschleiß, Verbrennungsschwerpunktlagen oder mechanische Toleranzen der Zylinder 2 - hervorgerufen werden.

Durch das vorgeschlagene Verfahren können diese zylinderindividuell unterschiedlichen Zylinderparameter berücksichtigt werden, indem für jeden Zylinder 2 ein zylinderindividueller Zylindersollwert $p_{max}$' für ein erstes Zylindersignal $p_{max}$ eingestellt wird und in Abhängigkeit der Abweichung des ersten Zylindersignals $p_{max}$ vom Zylindersollwert $p_{max}$' ein Verbrennungsparameter Q des Zylinders 2 (z.B. die einem Zylinder zugeführte Brennstoffmenge) eingestellt wird, wobei das erste Zylindersignal $p_{max}$ dem Zylindersollwert $p_{max}$' nachgeführt wird (siehe Fig. 2). Insbesondere können dabei die zylinderindividuellen Zylindersollwerte $p_{max}$' der Zylinder 2 derart eingestellt werden, sodass die zu erzielenden zylinderindividuellen NOx-Emissionen $E_{cyl}$' bzw. Zylinderwirkungsgrade $\eta_{cyl}$' aller Zylinder 2 innerhalb eines vorgebbaren Bereichs liegen bzw. im Wesentlichen gleich sind. Insgesamt lässt sich damit durch die Berücksichtigung der zylinderindividuellen Unterschiede von Zylinderparametern ein erhöhter Gesamtwirkungsgrad über alle Zylinder 2 erzielen als ohne eine solche Berücksichtigung.

Fig. 2 zeigt beispielhaft die Verläufe eines jeweiligen zylinderindividuellen ersten Zylindersignals $p_{max}$ über die Zeit t von drei Zylindern 2 einer Brennkraftmaschine 1 (siehe Fig. 3). Bei den zylinderindividuellen ersten Zylindersignalen $p_{max}$ handelt es sich hierbei um den jeweiligen maximalen Zylinderinnendruck $p_{max}$ des entsprechenden Zylinders 2, der über jeweils einen Verbrennungszyklus des entsprechenden Zylinders 2 erfasst wurde. Durch zylinderindividuelle Unterschiede in Zylinderparametern wie Luftfüllung oder Verbrennungseigenschaften ergeben sich grundsätzlich unterschiedliche Verläufe der ersten Zylindersignale $p_{max}$. Das vorgeschlagene Verfahren sieht nun vor, für jeden Zylinder 2 einen zylinderindividuellen Zylindersollwert $p_{max}$' vorzugeben bzw. einzustellen, wobei das jeweilige erste Zylindersignal $p_{max}$ dem entsprechenden Zylindersollwert $p_{max}$' nachgeführt wird. Dadurch kann beispielsweise erreicht werden, dass trotz unterschiedlicher Zylindereigenschaften bzw. Zylinderparameter die jeweiligen NOx-Emission $E_{cyl}$ der Zylinder 2 bzw. die davon abhängigen Zylinderwirkungsgrade $\eta_{cyl}$ der Zylinder 2 im Wesentlichen gleiche oder ähnliche Werte aufweisen und sich insgesamt ein erhöhter Gesamtwirkungsgrad über alle Zylinder 2 erzielen lässt als ohne eine Berücksichtigung der unterschiedlichen Zylinderparameter der einzelnen Zylinder 2. Wie in der Abbildung dargestellt, erfolgt ein Nachführen der einzelnen ersten Zylindersignale $p_{max}$ auf die jeweiligen zylinderindividuellen Zylindersollwerte $p_{max}$' ab einem Zeitpunkt $t_1$, ab dem eine Regelung gemäß dem vorgeschlagenen Verfahren erfolgt.

Die jeweiligen Zylindersollwerte $p_{max}$' setzen sich im gezeigten Beispiel aus dem arithmetischen Mittelwert $p_{mean}$

der maximalen Zylinderinnendrücke $p_{max}$ aller Zylinder 2 und einem zylinderindividuellen Offset $\Delta m$ zusammen. In den jeweiligen Offsets $\Delta m$ sind dabei die zylinderindividuellen Unterschiede in den Zylinderparametern (z.B. Luftmasseäquivalent, Verbrennungsschwerpunktlage, Verdichtungsverhältnis, Zündverzug) berücksichtigt.

Fig. 3 zeigt eine Brennkraftmaschine 1 mit drei Zylindern 2. An jedem Zylinder 2 ist ein Zylinderdrucksensor 4 angeordnet, um ein zylinderindividuelles erstes Zylindersignal zu erfassen. Bei dem zylinderindividuellen ersten Zylindersignal kann es sich um den zeitlichen Verlauf des Zylinderinnendrucks oder dem maximalen Zylinderinnendruck $p_{max}$ über einen Verbrennungszyklus handeln. Es kann sich beim zylinderindividuellen ersten Zylindersignal auch um ein zeitlich gefiltertes Signal des maximalen Zylinderinnendrucks $p_{max}$ über mehrere Verbrennungszyklen handeln, beispielsweise über 10 bis 1000 Verbrennungszyklen, vorzugsweise 40 bis 100 Verbrennungszyklen. Das erfasste zylinderindividuelle erste Zylindersignal $p_{max}$ eines Zylinders 2 wird über eine Signalleitung 14 einer Regelungsvorrichtung 7 zugeführt, wobei das Ermitteln des maximalen Zylinderinnendrucks $p_{max}$ über einen Verbrennungszyklus oder das zeitliche Filtern des maximalen Zylinderinnendrucks $p_{max}$ über mehrere Verbrennungszyklen auch durch die Regelungsvorrichtung 7 erfolgen kann.

Wie nachfolgend beschrieben, wird durch die Regelungsvorrichtung 7 gemäß dem vorgeschlagenen Verfahren jeweils eine zylinderindividuell zu dosierende Brennstoffmenge Q als Verbrennungsparameter für die Zylinder 2 ermittelt und mittels Steuerleitungen 15 an entsprechende Brennstoffdosierventile 3 gemeldet. Durch die Brennstoffdosierventile 3 werden die entsprechenden zylinderindividuellen Brennstoffmengen Q in die Zylinder 2 dosiert und damit die zylinderindividuellen ersten Zylindersignale $p_{max}$ gemäß dem vorgeschlagenen Verfahren den durch die Regelungsvorrichtung 7 gebildeten zylinderindividuellen Zylindersollwerten $p_{max}'$ nachgeführt.

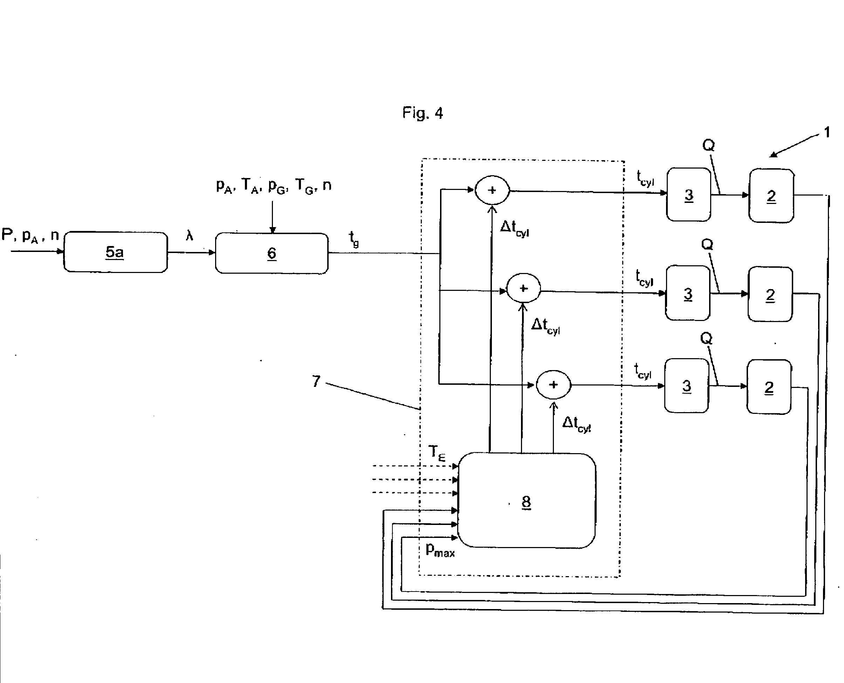

Fig. 4 zeigt ein schematisches Blockschaltbild von drei Zylindern 2 einer Brennkraftmaschine 1 mit einem luftgeführten Brennverfahren. Jedem Zylinder 2 ist ein Brennstoffdosierventil 3 zugeordnet, wobei durch das jeweilige Brennstoffdosierventil 3 die dem entsprechenden Zylinder 2 zugeführte Brennstoffmenge Q eingestellt werden kann. Eine Regelungsvorrichtung 7 steuert dabei die Brennstoffdosierventile 3 an, indem die Regelungsvorrichtung 7 eine jeweilige zylinderindividuelle Öffnungsdauer des Brennstoffdosierventils 3 in Form eines zylinderindividuellen Parameterwertes $t_{cyl}$ ausgibt.

Die Brennstoffdosierventile 3 sind in diesem Beispiel als Port-Injection-Ventile ausgeführt, welche nur eine vollständig geöffnete und eine vollständig geschlossene Stellung kennen. Bei vollständig geöffneter Stellung eines Brennstoffdosierventils 3 wird in den Einlasstrakt des dem Brennstoffdosierventil 3 zugeordneten Zylinders 2 ein Brennstoff in Form eines Treibgases eingedüst. Durch die Öffnungsdauer des Brennstoffdosierventils 3 kann somit die Brennstoffmenge Q für den jeweiligen Zylinder 2 festgelegt werden.

Von jedem Zylinder 2 wird ein zylinderindividuelles erstes Zylindersignal $p_{max}$ erfasst und der Regelungsvorrichtung 7 zugeführt. Ein zylinderindividuelles erstes Zylindersignal $p_{max}$ entspricht dabei dem maximalen Zylinderinnendruck des entsprechenden Zylinders 2 während eines Verbrennungszyklus. Im gezeigten Beispiel werden die zylinderindividuellen ersten Zylindersignale $p_{max}$ einer Differenzwertberechnung 8 der Regelungsvorrichtung 7 zugeführt. Die Differenzwertberechnung 8 ermittelt für jeden Zylinder 2 bzw. für jedes Brennstoffdosierventil 3 einen Differenzwert $\Delta t_{cyl}$, der jeweils zu einem vorgebbaren Zielwert $t_g$ addiert wird, wodurch sich für jedes Brennstoffdosierventil 3 als Parameterwert $t_{cyl}$ eine zylinderindividuelle Öffnungsdauer ergibt.

Der vorgebbare motorglobale Zielwert $t_g$ wird im gezeigten Beispiel aus einem vorgebbaren Brennstoff-Luft-Verhältnis $\lambda$ ermittelt, wobei das vorgebbare Brennstoff-Luft-Verhältnis $\lambda$ durch einen Emissionsregler 5a aus einem Leistungsäquivalent P der abgegebenen Leistung der Brennkraftmaschine 1 (z.B. eine gemessene elektrische Leistung eines mit der Brennkraftmaschine 1 verbundenen Generators) und/oder aus einem Ladeluftdruck $p_A$ und/oder aus einer Motordrehzahl n der Brennkraftmaschine 1 ermittelt wird. Neben dem Brennstoff-Luft-Verhältnis $\lambda$ können in eine Zielwertberechnung 6 zusätzlich der Druck $p_A$ und die Temperatur $T_A$ der Ladeluft, der Druck $p_G$ und und die Temperatur $T_G$ der Brennstoffzuführung sowie die Motordrehzahl n der Brennkraftmaschine 1 einfließen. Darüber hinaus können noch ein Durchflusskennwert der Brennstoffdosierventile 3 (z.B. effektiver Strömungsdurchmesser gemäß der polytropen Ausflussgleichung oder ein Kv-Wert) sowie Kenngrößen des Brennstoffs bzw. Brenngases (z.B. die Gasdichte, der Polytropenexponent oder der Heizwert) in die Zielwertberechnung 6 einfließen. Daraus ermittelt die Zielwertberechnung 6 den vorgebbaren Zielwert $t_g$, der einem motorglobalen Öffnungsdauer-Grundwert für die Öffnungsdauern aller Brennstoffdosierventile 3 entspricht.

Durch die Differenzwertberechnung 8 wird für jedes einzelne Brennstoffdosierventil 3 ein zylinderindividueller Öffnungsdauer-Offset bzw. Differenzwert $\Delta t_{cyl}$ ermittelt. Diese zylinderindividuellen Differenzwerte $\Delta t_{cyl}$ sind abhängig von der Abweichung des Zylinderspitzendrucks $p_{max}$ des jeweiligen Zylinders 2 vom jeweiligen zylinderindividuellen Zylindersollwert $p_{max}'$. Die jeweilige Summe aus motorglobalem Öffnungsdauer-Grundwert $t_g$ und zylinderindividuellem Öffnungsdauer-Offset $\Delta t_{cyl}$ ergibt die an die Treiberelektronik des jeweiligen Brennstoffdosierventils 3 kommandierte Zielöffnungsdauer $t_{cyl}$.

Alternativ oder zusätzlich zur Verwendung des maximalen Zylinderinnendrucks $p_{max}$ als zylinderindividuelles erstes Zylindersignal ist auch die Verwendung der jeweiligen zylinderindividuellen Zylinderabgastemperatur $T_E$ strichliert angedeutet.

Dabei können wiederum aus den Abweichungen der zylinderindividuellen Zylinderabgastemperaturen $T_E$ zu einem jeweiligen zylinderindividuellen Zylindersollwert für die Zylinderabgastemperatur entsprechende zylinderindividuelle Öffnungsdauer-Offsets $\Delta t_{cyl}$ errechnet werden. Die zylinderindividuellen Zylinderabgastemperaturen $T_E$ können beispielsweise als Alternative verwendet werden, wenn keine Zylinderinnendrucksensoren 4 verbaut sind oder auch als Rückfalllösung, wenn Zylinderdrucksignale ausfallen, um die Verfügbarkeit der Brennkraftmaschine 1 im Falle eines Zylinderdrucksensorausfalles zu erhöhen.

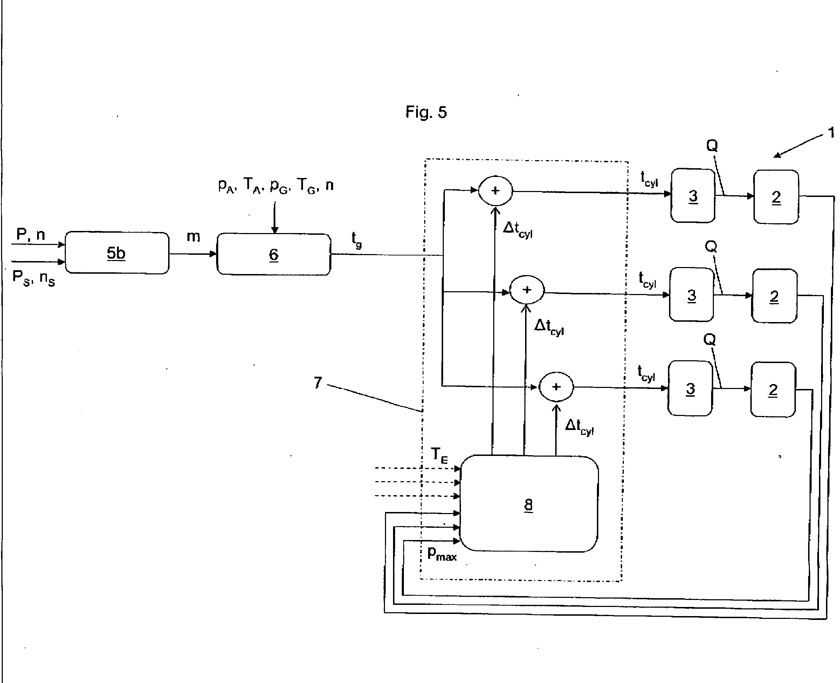

Fig. 5 zeigt ein Blockschaltbild gemäß Fig. 4, wobei in diesem Fall die Brennkraftmaschine 1 mit einem gasgeführten Brennverfahren betrieben wird. Der vorgebbare motorglobale Zielwert $t_g$ wird im gezeigten Beispiel durch einen Regler 5b ermittelt, der einen Leistungsregler und/oder einen Drehzahlregler umfassen kann. Für den Leistungsregler können dabei neben einem Leistungsäquivalent P der abgegebenen Leistung der Brennkraftmaschine 1 (Istleistung) ein vorgebbares Zielleistungsäquivalent Ps (Sollleistung) der Brennkraftmaschine 1 als Eingangsgrößen dienen und für den Drehzahlregler kann neben einer jeweils aktuellen Motordrehzahl n (Istdrehzahl) der Brennkraftmaschine 1 eine vorgebbare Zieldrehzahl ns (Solldrehzahl) der Brennkraftmaschine 1 als Eingangsgröße dienen. Im Regler 5b wird ein motorglobaler Vorgabewert für den Brennstoffmassenstrom m ermittelt, aus dem in weiterer Folge in einer Zielwertberechnung 6 der vorgebbare motorglobale Zielwert $t_g$ - z.B. für die motorglobale Öffnungsdauer von Brennstoffdosierventilen oder für den motorglobalen Vorgabewert für den Zündzeitpunkt von Zündeinrichtungen - ermittelt wird.

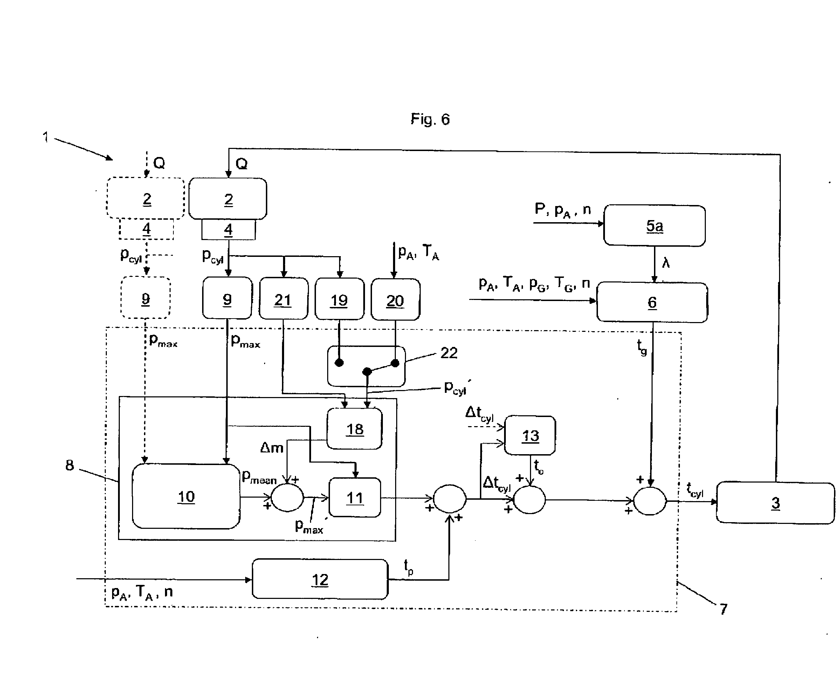

Fig. 6 zeigt ein Blockschaltbild gemäß Fig. 4, wobei die Regelungsvorrichtung 7 sowie die Differenzwertberechnung 8 detaillierter dargestellt sind. Diese Darstellung zeigt den Regelungsablauf für nur einen Zylinder 2 der Brennkraftmaschine 1 detailliert. Weitere Zylinder 2 der Brennkraftmaschine 1 sind dabei strichliert angedeutet.

In jedem Zylinder 2 ist ein Zylinderinnendrucksensor 4 angeordnet. Ein Zylinderinnendrucksensor 4 kann dabei den Verlauf des Zylinderinnendrucks $p_{cyl}$ über einen Verbrennungszyklus erfassen. Eine Maximalwerterfassung 9 kann den maximalen Zylinderinnendruck $p_{max}$ bzw. Spitzendruck des jeweiligen Zylinders 2 im vorangegangenen Verbrennungszyklus ermitteln.

Die Spitzendrücke aller Zylinder 2 werden als zylinderindividuelle erste Zylindersignale $p_{max}$ einer Mittelwertberechnung 10 zugeführt. Diese Mittelwertberechnung 10 bildet im gezeigten Beispiel aus den zylinderindividuellen ersten Zylindersignalen $p_{max}$ den arithmetischen Mittelwert $p_{mean}$ und gibt diesen aus. Zusätzlich wird in einer Offsetberechnung 18 ein zylinderindividueller Offset $\Delta m$ berechnet und ausgegeben. Die Summe aus dem arithmetischen Mittelwert $p_{mean}$ der zylinderindividuellen ersten Zylindersignale $p_{max}$ aller Zylinder 2 und dem zylinderindividuellen Offset $\Delta m$ bildet im gezeigten Beispiel den zylinderindividuellen Zylindersollwert $p_{max}'$, der einem Sollwertregler 11 zugeführt wird.

Der zylinderindividuelle Offset $\Delta m$ wird im gezeigten Beispiel in einer Offsetberechnung 18 aus dem Zylinderinnendruck im entsprechenden Zylinder 2 vor Zündung $p_{cyl}'$ (nach dem Schließen eines dem Zylinder 2 zugeordneten Einlassventils während des Kompressionstaktes) und aus der Verbrennungsschwerpunktlage des Zylinders 2 berechnet. Dabei kann der Zylinderinnendruck vor Zündung $p_{cyl}'$ entweder direkt aus dem zeitlichen Verlauf des Zylinderinnendrucksignals $p_{cyl}$ durch eine entsprechende Druckberechnung 19 ermittelt werden oder auch aus einem lastabhängigen Druckermittlungskennfeld 20 berechnet werden. Das Druckermittlungskennfeld 20 kann dabei entsprechende Werte des Zylinderinnendrucks vor Zündung $p_{cyl}'$ enthalten, die abhängig von der Last und/oder vom Ladeluftdruck $p_A$ und/oder von der Ladelufttemperatur $T_A$ und/oder von der Motordrehzahl n der Brennkraftmaschine 1 sind. Die Auswahl der Quelle für den Wert des Zylinderinnendrucks vor Zündung $p_{cyl}'$ erfolgt durch einen Druckquellenumschalter 22. Die Ermittlung der Verbrennungsschwerpunktlage des jeweiligen Zylinders 2 erfolgt in einer Schwerpunktlagenermittlung 21 in bekannter Weise aus dem zeitlichen Verlauf des Zylinderinnendrucksignals $p_{cyl}$.

Generell kann die Ermittlung des zylinderindividuellen Offsets $\Delta m$ in Abhängigkeit wenigstens eines der folgenden zylinderindividuellen Zylinderparameter erfolgen: Luftmasseäquivalent, Verbrennungsschwerpunktlage, Verdichtungsverhältnis, Zündverzug. Die Ermittlung des zylinderindividuellen Offsets $\Delta m$ kann dabei auf Abweichungen wenigstens eines jeweiligen Zylinderparameters vom Mittelwert dieses Zylinderparameters über alle Zylinder 2 gestützt sein.

Im Sollwertregler 11 wird die Abweichung des ersten Zylindersignals $p_{max}$ eines Zylinders 2 vom entsprechenden Zylindersollwert $p_{max}'$ ermittelt und in weiterer Folge ein Differenzwert $\Delta t_{cyl}$ für das Brennstoffdosierventil 3, das dem Zylinder 2 zugeordnet ist, ermittelt.

Der jeweilige Differenzwert $\Delta t_{cyl}$ für ein Brennstoffdosierventil 3, das dem jeweiligen Zylinder 2 zugeordnet ist, wird dabei zu einem motorglobalen, vorgebbaren Zielwert $t_g$ addiert, wodurch sich eine Öffnungsdauer für das Brennstoffdosierventil 3 als Parameterwert $t_{cyl}$ ergibt. Der vorgebbare Zielwert $t_g$ wird dabei, wie in Fig. 4 beschrieben, aus einem Emissionsregler der Brennkraftmaschine 1 ermittelt. Er kann grundsätzlich auch aus einem Leistungsregler und/oder aus einem Drehzahlregler (wie in Fig. 5 beschrieben) der Brennkraftmaschine 1 ermittelt werden.

Im gezeigten Beispiel umfasst der jeweilige Differenzwert $\Delta t_{cyl}$ einen zylinderindividuellen Vorsteuerwert $t_p$, der durch eine Vorsteuerwertberechnung 12 aus dem Ladeluftdruck $p_A$ und/oder der Ladelufttemperatur $T_A$ und/oder der Motordrehzahl n der Brennkraftmaschine 1 ermittelt wird. Dieser jeweilige Vorsteuerwert $t_p$ kann dabei beispielsweise durch Messungen bei Inbetriebnahme der Brennkraftmaschine 1 ermittelt und in einem Kennfeld abgelegt werden.

Generell kann der Sollwertregler 11 beispielsweise als P-, PI- oder PID-Regler ausgeführt werden. Es sind aber auch andere Reglerkonzepte und Reglertypen einsetzbar, wie beispielsweise LQ-Regler, robuste Regler oder Fuzzy-Regler.

Um unerwünschte Auswirkungen auf die globale Motorregelung und insbesondere auf den Emissionsregler 5a zu vermeiden, werden die Differenzwerte $\Delta t_{cyl}$ jeweils zusätzlich noch mit einem Ausgleichswert $t_o$ aus einer Ausgleichswertberechnung 13 beaufschlagt.

Dieser für alle Differenzwerte $\Delta t_{cyl}$ gleiche Ausgleichswert $t_o$ entspricht dem arithmetischen Mittelwert der Differenzwerte $\Delta t_{cyl}$ aller Zylinder 2 und kann positiv oder negativ sein. Insgesamt ist es damit möglich, das vorgeschlagene Verfahren auch bei Brennkraftmaschinen 1 nachzurüsten, die bisher ohne Zylindergleichstellung bzw. nur mit einem globalen Regler betrieben wurden, ohne dass diese zusätzliche Regelung eine Auswirkung auf die globale Motorregelung hat.

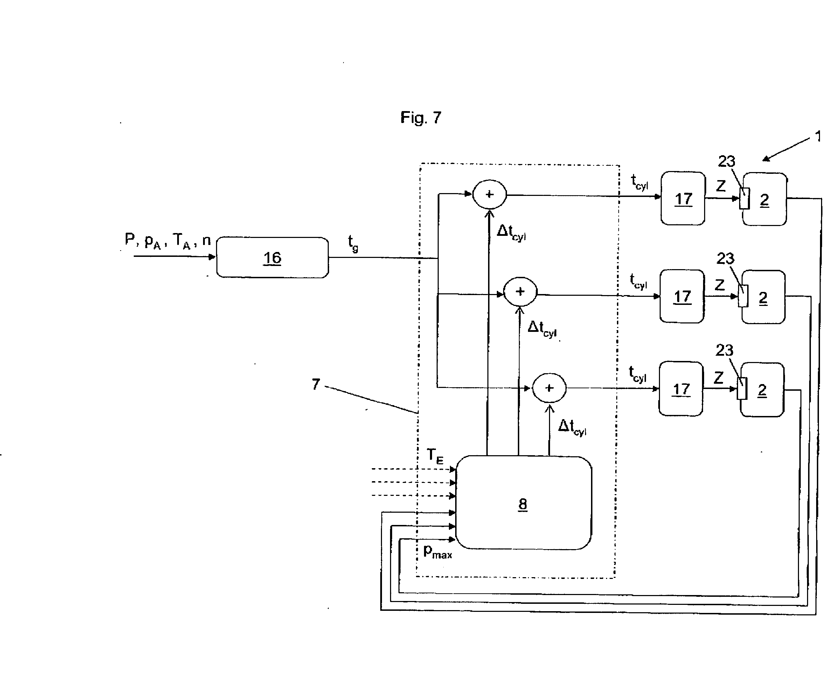

Fig. 7 zeigt ein schematisches Blockschaltbild ähnlich der Fig. 4, wobei mit der gezeigten Ausführungsform der Erfindung jedoch nicht die Brennstoffmengen Q für die Zylinder 2 sondern die Zündzeitpunkte Z von an bzw. in den Zylindern 2 angeordneten Zündeinrichtungen 23 eingestellt werden. Der global vorgebbare Zielwert $t_g$ (globaler Vorgabewert) für den Zündzeitpunkt Z wird dabei aus einem Zündzeitpunktkennfeld 16 ermittelt, wobei im Zündzeitpunktkennfeld 16 geeignete Werte für den globalen Vorgabewert $t_g$ abhängig von der Leistung bzw. dem Leistungsäquivalent P und/oder dem Ladeluftdruck $p_A$ und/oder der Ladelufttemperatur $T_A$ und/oder der Motordrehzahl n der Brennkraftmaschine 1 abgelegt sind. Der jeweilige durch die Regelungsvorrichtung 7 ermittelte Parameterwert $t_{cyl}$ - ausgedrückt als Grad Kurbelwinkel vor OT - wird einer Zündungssteuerung 17 gemeldet. Die Zündungssteuerung 17 aktiviert zum jeweils angegebenen Zündzeitpunkt Z die jeweilige Zündeinrichtung 23. Dabei wird in diesem Beispiel der Zündzeitpunkt Z eines Zylinders 2 früher gegenüber dem globalen Vorgabewert $t_g$ eingestellt, falls der Zylinderspitzendruck $p_{max}$ des Zylinders 2 (erstes Zylindersignal) kleiner dem Zylindersollwert $p_{max}$' ist und der Zündzeitpunkt Z eines Zylinders 2 später gegenüber dem globalen Vorgabewert $t_g$ eingestellt, falls der Zylinderspitzendruck $p_{max}$ des Zylinders 2 größer dem Zylindersollwert $p_{max}$' ist.

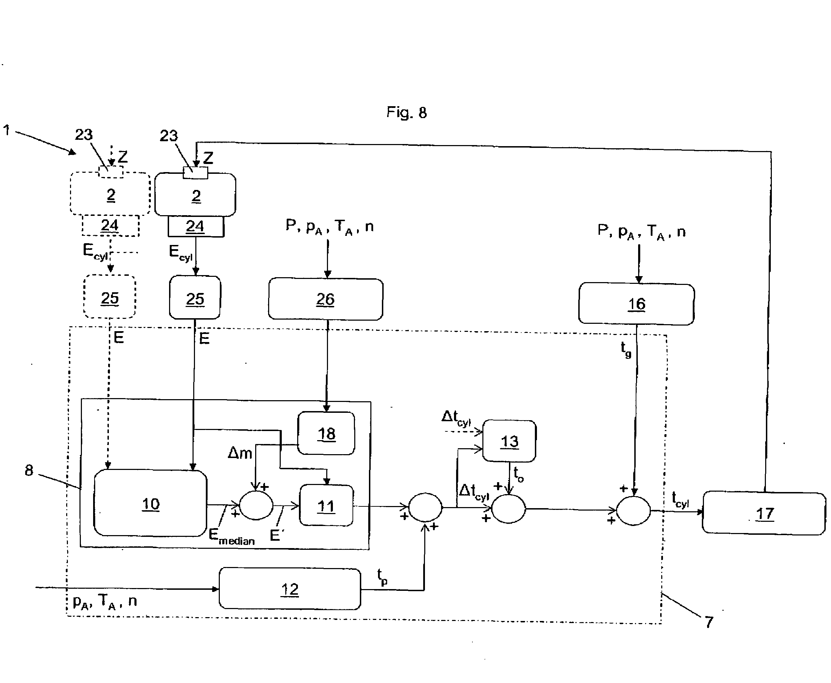

Fig. 8 zeigt ein schematisches Blockschaltbild einer weiteren Ausführungsform der Erfindung ähnlich der Fig. 6, wobei jedoch nicht die Brennstoffmengen Q für die Zylinder 2 sondern die Zündzeitpunkte Z von an bzw. in den Zylindern 2 angeordneten Zündeinrichtungen 23 eingestellt werden. In diesem Beispiel werden jeweils die Stickoxidemissionen $E_{cyl}$ eines Zylinders 2 über einen Verbrennungszyklus von einer NOx-Sonde 24 erfasst und einer Auswerteeinheit 25 zugeführt. Die Auswerteeinheit 25 ermittelt aus dem zeitlichen Verlauf der Stickoxidemissionen $E_{cyl}$ über einen Verbrennungszyklus einen gefilterten Emissionswert, der als zylinderindividuelles Signal E der Sollwertberechnung 10 zugeführt wird. Aus den zylinderindividuellen Signalen E aller Zylinder 2 bildet die Sollwertberechnung 10 den Median $E_{median}$ und gibt diesen aus. Zusätzlich wird in einer Offsetberechnung 18 ein zylinderindividueller Offset $\Delta m$ berechnet und ausgegeben. Die Summe aus dem Median $E_{median}$ und dem zylinderindividuellen Offset $\Delta m$ bildet im gezeigten Beispiel den zylinderindividuellen Zylindersollwert E', der an einen Sollwertregler 11 gemeldet wird.

Der zylinderindividuelle Offset $\Delta m$ wird im gezeigten Beispiel in einer Offsetberechnung 18 ermittelt, indem ein Differenzwertkennfeld 26 ausgelesen wird, in welchem geeignete Werte der Offsets $\Delta m$ für den entsprechenden Zylinder 2 abhängig von der Leistung P und/oder dem Ladeluftdruck $p_A$ und/oder der Ladelufttemperatur $T_A$ und/oder der Motordrehzahl n der Brennkraftmaschine 1 abgelegt sind. Die im Differenzwertkennfeld 26 abgelegten Werte für die zylinderindividuellen Offsets $\Delta m$ der Zylinder 2 wurden dabei auf einem Prüfstand ermittelt.

Im Sollwertregler 11 wird die Abweichung des zylinderindividuellen Signals E vom Zylindersollwert E' ermittelt und abhängig davon ein Differenzwert $\Delta t_{cyl}$ für den Zündzeitpunkt Z einer dem entsprechenden Zylinder 2 zugeordneten Zündeinrichtung 23 ermittelt. Der jeweilige Differenzwert $\Delta t_{cyl}$ wird dabei zu einem motorglobalen, vorgebbaren Zielwert $t_g$ addiert, wodurch sich ein Zündzeitpunkt Z in Grad Kurbelwinkel vor OT als Parameterwert $t_{cyl}$ ergibt, der an eine Zündungssteuerung 17 gemeldet wird, wobei die Zündungssteuerung 17 zum angegebenen Zündzeitpunkt Z die Zündeinrichtung 23 (z.B. eine Zündkerze) aktiviert. Der vorgebbare Zielwert $t_g$ wird dabei, wie in Fig. 7 beschrieben, aus einem Zündzeitpunktkennfeld 16 ermittelt.

## Patentansprüche

1. Verfahren zum Betreiben einer Brennkraftmaschine (1), insbesondere eines Gasmotors, mit wenigstens zwei Zylindern (2), wobei von jedem Zylinder (2) ein zylinderindividuelles erstes Zylindersignal ($p_{max}$, E) erfasst wird, wobei abhängig vom ersten Zylindersignal ($p_{max}$, E) wenigstens ein Verbrennungsparameter (Q, Z) des entsprechenden Zylinders (2) eingestellt wird, wobei für jeden Zylinder (2) ein zylinderindividueller Zylindersollwert ($p_{max}$', E') für das erste Zylindersignal ($p_{max}$, E) eingestellt wird, welcher zylinderindividuelle Zylindersollwert ($p_{max}$,' E') eine statistische Größe der ersten Zylindersignale ($p_{max}$, E) aller Zylinder (2) und einen zylinderindividuellen Offset ($\Delta m$) umfasst, wobei in Abhängigkeit der Abweichung des ersten Zylindersignals ($p_{max}$, E) vom Zylindersollwert ($p_{max}$', E') der wenigstens eine Verbrennungsparameter (Q, Z) des Zylinders (2) eingestellt wird, wobei das erste Zylindersignal ($p_{max}$, E) dem Zylindersollwert ($p_{max}$', E') nachgeführt wird, **dadurch gekennzeichnet, dass** der zylinderindividuelle

Offset ($\Delta$m)

- durch ein Differenzwertkennfeld (20,26) ermittelt wird, wobei im Differenzwertkennfeld (20,26) zumindest ein Leistungsäquivalent (P) der abgegebenen Leistung der Brennkraftmaschine (1) und/oder ein Ladeluftdruck ($p_A$) der Brennkraftmaschine (1), berücksichtigt ist, und
- in Abhängigkeit wenigstens eines der folgenden zylinderindividuellen Zylinderparameter ermittelt wird: Zylinderdruck während der Verdichtungsphase vor Zündung, Luftmasseäquivalent, Verbrennungsschwerpunktlage, Verdichtungsverhältnis, Zündverzug.

2. Verfahren nach Anspruch 1, **dadurch gekennzeichnet, dass** von jedem Zylinder (2) wenigstens eines der folgenden zylinderindividuellen ersten Zylindersignale erfasst wird: Zylinderinnendruck ($p_{cyl}$), Zylinderabgastemperatur ($T_E$), Stickoxidemissionen (E), wobei vorzugsweise als zylinderindividuelles erstes Zylindersignal ein maximaler Zylinderinnendruck ($p_{max}$) eines Verbrennungszyklus erfasst wird.

3. Verfahren nach Anspruch 1 oder 2, **dadurch gekennzeichnet, dass** der zylinderindividuelle Zylindersollwert ($p_{max}$', E') den arithmetischen Mittelwert ($p_{mean}$) und/oder den Median ($E_{median}$) der ersten Zylindersignale ($p_{max}$, E) aller Zylinder (2) darstellt.

4. Verfahren nach einem der Ansprüche 1 bis 3, **dadurch gekennzeichnet, dass** im Differenzwertkennfeld (26) zusätzlich eine Ladelufttemperatur ($T_A$) und/oder eine Motordrehzahl (n) der Brennkraftmaschine (1) berücksichtigt ist.

5. Verfahren nach einem der Ansprüche 1 bis 4, **dadurch gekennzeichnet, dass** der zylinderindividuelle Offset ($\Delta$m) in Abhängigkeit wenigstens einer Abweichung ($\Delta$pverd, $\Delta$air, $\Delta$MFB, $\Delta\varepsilon$, $\Delta$delay) eines Zylinderparameters von einem Mittelwert des Zylinderparameters aller Zylinder ermittelt wird.

6. Verfahren nach Anspruch 5, **dadurch gekennzeichnet, dass** der zylinderindividuelle Offset ($\Delta$m) aus wenigstens einer Abweichung ($\Delta$pverd, $\Delta$air, $\Delta$MFB, $\Delta\varepsilon$, $\Delta$delay) gemäß folgender Formel ermittelt wird:

$$\Delta m = a \cdot \Delta pverd + b \cdot \Delta air + c \cdot \Delta MFB + d \cdot \Delta \varepsilon + e \cdot \Delta delay$$

wobei $\Delta$pverd die Abweichung des Zylinderdrucks während der Verdichtungsphase vor Zündung, $\Delta$air die Abweichung des Luftmasseäquivalents, $\Delta$MFB die Abweichung in der Verbrennungsschwerpunktlage, $\Delta\varepsilon$ die Abweichung im Verdichtungsverhältnis und $\Delta$delay die Abweichungen im Zündverzug bezeichnet und wobei a, b, c, d, e Koeffizienten zur Gewichtung der Abweichungen darstellen.

7. Verfahren nach einem der Ansprüche 1 bis 6, **dadurch gekennzeichnet, dass** als Verbrennungsparameter eine Brennstoffmenge (Q) für den entsprechenden Zylinder (2) eingestellt wird, wobei vorzugsweise die Brennstoffmenge (Q) für einen Zylinder (2) erhöht wird, falls das zylinderindividuelle erste Zylindersignal ($p_{max}$, E) kleiner dem zylinderindividuellen Zylindersollwert ($p_{max}$', E') ist und/oder die Brennstoffmenge (Q) für einen Zylinder (2) verringert wird, falls das zylinderindividuelle erste Zylindersignal ($p_{max}$, E) größer dem zylinderindividuellen Zylindersollwert ($p_{max}$', E') ist.

8. Verfahren nach Anspruch 7 **dadurch gekennzeichnet, dass** für jeden Zylinder (2) ein Brennstoffdosierventil (3) vorgesehen ist, wobei zum Einstellen der Brennstoffmenge (Q) für einen Zylinder (2) die Öffnungsdauer ($t_{cyl}$) des entsprechenden Brennstoffdosierventils (3) eingestellt wird.

9. Verfahren nach einem der Ansprüche 1 bis 8, **dadurch gekennzeichnet, dass** als Verbrennungsparameter ein Zündzeitpunkt (Z) für den entsprechenden Zylinder (2) eingestellt wird, wobei vorzugsweise der Zündzeitpunkt (Z) für einen Zylinder (2) früher eingestellt wird, falls das zylinderindividuelle erste Zylindersignal ($p_{max}$, E) kleiner dem zylinderindividuellen Zylindersollwert ($p_{max}$', E') ist und/oder der Zündzeitpunkt (Z) für einen Zylinder (2) später eingestellt wird, falls das zylinderindividuelle erste Zylindersignal ($p_{max}$, E) größer dem zylinderindividuellen Zylindersollwert ($p_{max}$', E') ist.

10. Verfahren nach Anspruch 9, **dadurch gekennzeichnet, dass** für jeden Zylinder (2) eine Zündeinrichtung (18) vorgesehen ist, wobei der Zündzeitpunkt (Z) der Zündeinrichtung (18) in Grad Kurbelwinkel vor OT ($t_{cyl}$) eingestellt wird.

**11.** Verfahren nach einem der Ansprüche 1 bis 10, **dadurch gekennzeichnet, dass** zum Einstellen des wenigstens einen Verbrennungsparameters (Q, Z) ein Parameterwert ($t_{cyl}$) ermittelt wird, wobei vorzugsweise der Parameterwert ($t_{cyl}$) einen vorgebbaren motorglobalen Zielwert ($t_g$) umfasst.

**12.** Verfahren nach Anspruch 11, **dadurch gekennzeichnet, dass** der vorgebbare Zielwert ($t_g$) aus einem vorgebbaren Brennstoff-Luft-Verhältnis ($\lambda$) ermittelt wird, wobei vorzugsweise das vorgebbare Brennstoff-Luft-Verhältnis ($\lambda$) aus einem Leistungsäquivalent (P) der abgegebenen Leistung der Brennkraftmaschine (1), vorzugsweise einer elektrischen Leistung eines mit der Brennkraftmaschine (1) verbundenen Generators, und/oder aus einem Ladeluftdruck ($p_A$) und/oder aus einer Motordrehzahl (n) der Brennkraftmaschine (1) ermittelt wird.

**13.** Verfahren nach Anspruch 11, **dadurch gekennzeichnet, dass** der vorgebbare Zielwert ($t_g$) in Abhängigkeit von der Abweichung eines Leistungsäquivalents (P) der abgegebenen Leistung der Brennkraftmaschine (1) von einem vorgebbaren Zielleistungsäquivalent (Ps) und/oder in Abhängigkeit von der Abweichung einer Motordrehzahl (n) der Brennkraftmaschine (1) von einer vorgebbaren Zieldrehzahl ($n_S$) der Brennkraftmaschine (1) ermittelt wird.

**14.** Verfahren nach einem der Ansprüche 1 bis 13, **dadurch gekennzeichnet, dass** für jeden Zylinder (2) ein Verbrennungszustand überwacht und in Bezug auf einen vorgebbaren Sollzustand als normal oder abnormal bewertet wird, wobei der Verbrennungsparameter (Q, Z) eines Zylinders (2) nur eingestellt wird, falls der Verbrennungszustand des Zylinders (2) als normal bewertet wird, wobei vorzugsweise als Verbrennungszustand Klopfen und/oder Glühzünden und/oder Aussetzen in der Verbrennung überwacht wird, wobei der Verbrennungszustand eines Zylinders (2) als normal bewertet wird, falls kein Klopfen und/oder kein Glühzünden und/oder kein Aussetzen in der Verbrennung erkannt werden.

**Claims**

**1.** A method for operating an internal combustion engine (1), in particular a gas engine, having at least two cylinders (2), wherein a cylinder-specific first cylinder signal ($p_{max}$, E) is acquired from each cylinder (2), wherein at least one combustion parameter (Q, Z) of the corresponding cylinder (2) is controlled as a function of the first cylinder signal ($p_{max}$, E), wherein a cylinder-specific reference cylinder value ($p_{max}$', E') is set for the first cylinder signal ($p_{max}$, E) for each cylinder, which cylinder-specific reference cylinder value ($p_{max}$', E') comprises a statistical variable of the first cylinder signals ($p_{max}$, E) of all cylinders (2) and a cylinder-specific offset ($\Delta m$), wherein the at least one combustion parameter (Q, Z) of the cylinder (2) is adjusted as a function of the deviation of the first cylinder signal ($p_{max}$, E) from the reference cylinder value ($p_{max}$', E'), wherein the first cylinder signal ($p_{max}$, E) tracks the reference cylinder value ($p_{max}$', E'), **characterized in that** the cylinder-specific offset ($\Delta m$)

- is determined by means of a difference value characteristic mapping (20, 26), wherein the difference value characteristic mapping (20, 26) takes into account at least one power equivalent (2) of the output power of the internal combustion engine (1) and/or a charge air pressure ($p_A$) of the internal combustion engine (1) and
- at least one of the following cylinder-specific first cylinder signals is acquired: cylinder pressure during the compression before ignition phase, air mass equivalent, centre of combustion, compression ratio, ignition delay.

**2.** The method according to claim 1, **characterized in that** at least one of the following cylinder-specific first cylinder signals is acquired from each cylinder (2): internal cylinder pressure ($p_{cyl}$), cylinder exhaust temperature ($T_E$), oxides of nitrogen emissions (E), wherein preferably a maximum internal cylinder pressure ($p_{max}$) of a combustion cycle is acquired as the cylinder-specific first cylinder signal.

**3.** The method according to claim 1 or 2, **characterized in that** the cylinder-specific reference cylinder value ($p_{max}$', E') is the arithmetic mean ($p_{mean}$) and/or the median ($E_{median}$) of the first cylinder signals ($p_{max}$, E) of all cylinders (2).

**4.** The method according to one of claims 1 to 3, **characterized in that** the difference value characteristic mapping (26), in addition, takes into account a charge air temperature ($T_A$) and/or an engine speed (n) of the internal combustion engine (1) .

**5.** The method according to one of claims 1 to 4, **characterized in that** the cylinder-specific offset ($\Delta m$) is determined as a function of at least one deviation ($\Delta pverd$, $\Delta air$, $\Delta MFB$, $\Delta\epsilon$, $\Delta delay$) of a cylinder parameter from a mean of the cylinder parameters of all cylinders.

6. The method according to claim 5, **characterized in that** the cylinder-specific offset ($\Delta$m) is determined as a function of at least one deviation ($\Delta$pverd, Lair, $\Delta$MFB, $\Delta\varepsilon$, $\Delta$delay) according to:

$$\Delta m = a \cdot \Delta pverd + b \cdot \Delta air + c \cdot \Delta MFB + d \cdot \Delta\varepsilon + e \cdot \Delta delay$$

wherein $\Delta$pverd is the deviation of the cylinder pressure during the compression before ignition phase, $\Delta$air is the deviation of the air mass equivalent, $\Delta$MFB is the deviation in the centre of combustion, $\Delta\varepsilon$ is the deviation in the compression ratio and $\Delta$delay is the deviation in the ignition delay, and wherein a, b, c, d, e are weighting coefficients for the deviations.

7. The method according to one of claims 1 to 6, **characterized in that** a fuel quantity (Q) for the corresponding cylinder (2) is used as the combustion parameter, wherein preferably the fuel quantity (Q) for a cylinder (2) is increased if the cylinder-specific first cylinder signal ($p_{max}$, E) is smaller than the cylinder-specific reference cylinder value ($p_{max}$', E') and/or the fuel quantity (Q) for a cylinder (2) is decreased if the cylinder-specific first cylinder signal ($p_{max}$, E) is larger than the cylinder-specific reference cylinder value ($p_{max}$', E').

8. The method according to claim 7, **characterized in that** a fuel metering valve (3) is provided for each cylinder (2), wherein in order to adjust the fuel quantity (Q) for a cylinder (2), the open period ($t_{cyl}$) for the corresponding fuel metering valve (3) is adjusted.

9. The method according to one of claims 1 to 8, **characterized in that** an ignition point (Z) for the corresponding cylinder (2) is adjusted as the combustion parameter, wherein preferably the ignition point (Z) for a cylinder (2) is set earlier if the cylinder-specific first cylinder signal ($p_{max}$, E) is smaller than the cylinder-specific reference cylinder value ($p_{max}$', E') and/or the ignition point (Z) for a cylinder (2) is set later if the cylinder-specific first cylinder signal ($p_{max}$, E) is larger than the cylinder-specific reference cylinder value ($p_{max}$', E').

10. The method according to claim 9, **characterized in that** an ignition device (18) is provided for each cylinder (2), wherein the ignition point (Z) for the ignition device (18) is set in degrees of crank angle before TDC ($t_{cyl}$).

11. The method according to one of claims 1 to 10, **characterized in that** in order to set the at least one combustion parameter (Q, Z), a parameter ($t_{cyl}$) is determined wherein preferably, the parameter ($t_{cyl}$) comprises a specifiable overall engine target value ($t_g$) .

12. The method according to claim 11, **characterized in that** the specifiable target value ($t_g$) is determined from a specifiable fuel-air ratio ($\lambda$), wherein preferably, the specifiable fuel-air ratio ($\lambda$) is determined from a power equivalent (2) of the output power of the internal combustion engine (1), preferably electrical power from a generator connected to the internal combustion engine (1), and/or from a charge air pressure ($p_A$) and/or from an engine speed (n) of the internal combustion engine (1).

13. The method according to claim 11, **characterized in that** the specifiable target value ($t_g$) is determined as a function of the deviation of a power equivalent (2) of the output power of the internal combustion engine (1) from a specifiable target power equivalent ($P_S$) and/or as a function of the deviation of an engine speed (n) of the internal combustion engine (1) from a specifiable target speed ($n_S$) of the internal combustion engine (1).

14. The method according to one of claims 1 to 13, **characterized in that** a combustion condition is monitored for each cylinder (2) and is evaluated as being normal or abnormal with respect to a specifiable reference state, wherein the combustion parameter (Q, Z) of a cylinder (2) is only adjusted if the combustion condition of the cylinder (2) is evaluated as being normal, wherein preferably knocking and/or auto-ignition and/or interruptions in combustion are monitored as the combustion condition, wherein the combustion condition of a cylinder (2) is evaluated as being normal if no knocking and/or auto-ignition and/or interruptions are discerned in the combustion.

**Revendications**

1. Procédé destiné à faire fonctionner un moteur à combustion interne (1), en particulier un moteur à gaz, avec au moins deux cylindres (2), dans lequel pour chaque cylindre (2), un premier signal de cylindre ($p_{max}$, E) spécifique au cylindre est détecté, dans lequel au moins un paramètre de combustion (Q, Z) du cylindre (2) correspondant est réglé en fonction du premier signal de cylindre ($P_{max}$, E), dans lequel pour chaque cylindre (2), une valeur théorique de cylindre ($p_{max}$', E') spécifique au cylindre pour le premier signal de cylindre ($p_{max}$, E) est réglée, laquelle valeur théorique de cylindre ($p_{max}$', E') spécifique au cylindre comprend une grandeur statistique des premiers signaux de cylindre ($p_{max}$, E) de tous les cylindres (2) et un décalage ($\Delta$m) spécifique au cylindre, dans lequel l'au moins un paramètre de combustion (Q, Z) du cylindre (2) est réglé en fonction de l'écart du premier signal de cylindre ($p_{max}$, E) par rapport à la valeur théorique de cylindre ($p_{max}$', E'), dans lequel le premier signal de cylindre ($p_{max}$, E) est mis à jour selon la valeur théorique de cylindre ($p_{max}$', E'), **caractérisé en ce que** le décalage ($\Delta$m) spécifique au cylindre

- est déterminé par un champ caractéristique de valeurs différentielles (20, 26), dans lequel au moins un équivalent de puissance (P) de la puissance délivrée du moteur à combustion interne (1) et/ou une pression d'air de suralimentation ($p_A$) du moteur à combustion interne (1) sont pris en compte dans le champ caractéristique de valeurs différentielles (20, 26), et
- est déterminé en fonction d'au moins un des paramètres de cylindre spécifiques au cylindre suivants : pression de cylindre pendant la phase de compression avant l'allumage, équivalent de masse d'air, position de gravité de combustion, rapport de compression, retard d'allumage.

2. Procédé selon la revendication 1, **caractérisé en ce que** pour chaque cylindre (2), au moins un des premiers signaux de cylindre spécifiques au cylindre suivants est détecté : pression interne de cylindre ($p_{cyl}$), température de gaz d'échappement de cylindre ($T_E$), émissions d'oxyde d'azote (E), dans lequel une pression interne de cylindre maximale ($p_{max}$) d'un cycle de combustion est détectée de préférence en tant que premier signal de cylindre spécifique au cylindre.

3. Procédé selon la revendication 1 ou 2, **caractérisé en ce que** la valeur théorique de cylindre ($p_{max}$', E') spécifique au cylindre représente la valeur moyenne arithmétique ($p_{mean}$) et/ou la médiane ($E_{median}$) des premiers signaux de cylindre ($p_{max}$, E) de tous les cylindres (2).

4. Procédé selon l'une quelconque des revendications 1 à 3, **caractérisé en ce que** sont prises en compte en supplément dans le champ caractéristique de valeurs différentielles (26) une température d'air de suralimentation ($T_A$) et/ou une vitesse de rotation de moteur (n) du moteur à combustion interne (1).

5. Procédé selon l'une quelconque des revendications 1 à 4, **caractérisé en ce que** le décalage ($\Delta$m) spécifique au cylindre est déterminé en fonction d'au moins un écart ($\Delta$pverd, $\Delta$air, $\Delta$MFB, $\Delta\varepsilon$, $\Delta$delay) d'un paramètre de cylindre par rapport à une valeur moyenne du paramètre de cylindre de tous les cylindres.

6. Procédé selon la revendication 5, **caractérisé en ce que** le décalage ($\Delta$m) spécifique au cylindre est déterminé à partir d'au moins un écart ($\Delta$pverd, $\Delta$air, $\Delta$MFB, $\Delta\varepsilon$, $\Delta$delay) selon la formule suivante :

$$\Delta m = a \cdot \Delta pverd + b \cdot \Delta air + c \cdot \Delta MFB + d \cdot \Delta\varepsilon + e \cdot \Delta delay,$$

dans lequel $\Delta$pverd désigne l'écart de la pression de cylindre pendant la phase de compression avant l'allumage, $\Delta$air désigne l'écart de l'équivalent de masse d'air, $\Delta$MFB désigne l'écart dans la position de gravité de combustion, $\Delta\varepsilon$ désigne l'écart dans le rapport de compression et $\Delta$delay désigne les écarts dans le retard d'allumage et dans lequel a, b, c, d, e représentent des coefficients de pondération des écarts.

7. Procédé selon l'une quelconque des revendications 1 à 6, **caractérisé en ce qu'**une quantité de combustible (Q) pour le cylindre (2) correspondant est réglée en tant que paramètre de combustion, dans lequel de préférence la quantité de combustible (Q) pour un cylindre (2) est augmentée si le premier signal de cylindre ($p_{max}$, E) spécifique au cylindre est inférieur à la valeur théorique de cylindre ($p_{max}$', E') spécifique au cylindre et/ou la quantité de combustible (Q) pour un cylindre (2) est réduite si le premier signal de cylindre ($p_{max}$, E) spécifique au cylindre est supérieur à la valeur théorique de cylindre ($p_{max}$', E') spécifique au cylindre.

8. Procédé selon la revendication 7, **caractérisé en ce qu'**est prévue pour chaque cylindre (2) une soupape de dosage de combustible (3), dans lequel la durée d'ouverture ($t_{cyl}$) de la soupape de dosage de combustible (3) correspondante est réglée pour régler la quantité de combustible (Q) pour un cylindre (2) .

9. Procédé selon l'une quelconque des revendications 1 à 8, **caractérisé en ce qu'**un moment d'allumage (Z) pour le cylindre (2) correspondant est réglé en tant que paramètre de combustion, dans lequel de préférence le moment de combustion (Z) pour un cylindre (2) est réglé plus tôt si le premier signal de cylindre ($p_{max}$, E) spécifique au cylindre est inférieur à la valeur théorique de cylindre ($p_{max}$', E') spécifique au cylindre et/ou le moment d'allumage (Z) pour un cylindre (2) est réglé plus tard si le premier signal de cylindre ($p_{max}$, E) spécifique au cylindre est supérieur à la valeur théorique de cylindre ($p_{max}$', E') spécifique au cylindre.

10. Procédé selon la revendication 9, **caractérisé en ce qu'**est prévu pour chaque cylindre (2) un système d'allumage (18), dans lequel le moment d'allumage (Z) du système d'allumage (18) est réglé en degrés d'angle de vilebrequin avant le PMH ($t_{cyl}$).

11. Procédé selon l'une quelconque des revendications 1 à 10, **caractérisé en ce que** pour régler l'au moins un paramètre de combustion (Q, Z), une valeur de paramètre ($t_{cyl}$) est déterminée, dans lequel de préférence la valeur de paramètre ($t_{cyl}$) comprend une valeur cible ($t_g$) globale moteur pouvant être spécifiée.

12. Procédé selon la revendication 11, **caractérisé en ce que** la valeur cible ($t_g$) pouvant être spécifiée est déterminée à partir d'un rapport combustible-air ($\lambda$) pouvant être spécifié, dans lequel de préférence le rapport combustible-air ($\lambda$) pouvant être spécifié est déterminé à partir d'un équivalent de puissance (P) de la puissance délivrée du moteur à combustion interne (1), de préférence d'une puissance électrique d'un générateur raccordé au moteur à combustion interne (1), et/ou à partir d'une pression d'air de suralimentation ($p_A$) et/ou à partir d'une vitesse de rotation de moteur (n) du moteur à combustion interne (1).

13. Procédé selon la revendication 11, **caractérisé en ce que** la valeur cible ($t_g$) pouvant être spécifiée est déterminée en fonction de l'écart d'un équivalent de puissance (P) de la puissance délivrée du moteur à combustion interne (1), d'un équivalent de puissance cible (Ps) pouvant être spécifié et/ou en fonction de l'écart d'une vitesse de rotation de moteur (n) du moteur à combustion interne (1) par une vitesse de rotation cible ($n_s$) pouvant être spécifiée du moteur à combustion interne (1).

14. Procédé selon l'une quelconque des revendications 1 à 13, **caractérisé en ce que** pour chaque cylindre (2), un état de combustion est surveillé et est évalué comme étant normal ou anormal en ce qui concerne un état théorique pouvant être spécifié, dans lequel le paramètre de combustion (Q, Z) d'un cylindre (2) est réglé seulement si l'état de combustion du cylindre (2) est évalué comme étant normal, dans lequel de préférence le cognement et/ou l'allumage à incandescence et/ou les ratés dans la combustion sont surveillés comme état de combustion, dans lequel l'état de combustion d'un cylindre (2) est évalué comme étant normal si aucun cognement et/ou aucun allumage à incandescence et/ou aucun raté d'allumage dans la combustion ne peuvent être identifiés.

Fig. 1

Fig. 2

EP 2 698 521 B1

Fig. 3

Fig. 4

Fig. 5

Fig. 6

EP 2 698 521 B1

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2010089364 A1
- US 2012191325 A1
- DE 10045689 A1
- DE 19955252 A1
- EP 2136058 A1
- US 7957889 B2
- EP 0259382 B1